# EUROPEAN PATENT APPLICATION

(11) **EP 4 468 814 A1**
(43) Date of publication of application: **27.11.2024**
(21) Application number: 23848949.6
(22) Date of filing: 27.04.2023
(51) Int. Cl.: H04W 76/11, H04N 21/43

(54) **MULTI-DEVICE COOPERATION METHOD, ELECTRONIC DEVICE AND RELATED PRODUCT**

(30) Priority: 05.08.2022 CN 202210940127
(71) Applicant: Honor Device Co., Ltd., Shenzhen, Guangdong 518040 (CN)
(72) Inventor: XIAO, Liang, Shenzhen, Guangdong 518040 (CN); QIN, Chuan, Shenzhen, Guangdong 518040 (CN); FANG, Xinkai, Shenzhen, Guangdong 518040 (CN)
(74) Representative: Isarpatent
(86) International application number: PCT/CN2023/091339
(87) International publication number: WO 2024/027238

(57) **Abstract**

Embodiments of this application provide a multi-device collaboration method, an electronic device, and a related product. The method includes: A first electronic device displays a first page in response to a user operation, where the first page includes a device identifier of the first electronic device and a device identifier of at least one slave device; and the first electronic device establishes a multi-device collaboration with a target device based on a first collaboration type in response to an operation of a user on a device identifier of the target device in the first page, and displays a type switching card in the first page. The target device is any one of the at least one slave device, and the type switching card includes a type identifier of at least one collaboration type supported between the first electronic device and the target device. In this way, the user can uniformly manage a multi-device collaboration between the first electronic device and various slave devices in the first page, and is not required to find control portals of various collaboration types in different user interfaces, such that user experience is improved.

## Description

This application claims priority to Chinese Patent Application No. 202210940127.6, filed with the China National Intellectual Property Administration on August 5, 2022 and entitled "MULTI-DEVICE COLLABORATION METHOD, ELECTRONIC DEVICE, AND RELATED PRODUCT", which is incorporated herein by reference in its entirety.

### TECHNICAL FIELD

This application relates to the field of terminal technologies, and particularly relates to a multi-device collaboration method, an electronic device, and a related product.

### BACKGROUND

A multi-device collaboration is a type of distributed technology applied to a plurality of electronic devices. Cross-system and cross-device collaboration between two or more electronic devices can be performed through the multi-device collaboration technology, so as to achieve resource sharing and collaborative operation.

As terminal technologies keep evolving, a variety of collaboration types of multi-device collaboration, such as screen projection and a multi-screen collaboration, emerge. Currently, no uniform control portal is available to all collaboration types in a terminal device, and control portals of the collaboration types are distributed in different user interfaces. For example, a control portal of the screen projection may be located in a playing interface of a video application, and a control portal of the multi-screen collaboration may be located in a sub-page of a system setup application. Therefore, a user needs to find corresponding control portals in different user interfaces and operate the control portals to set up different types of multi-device collaboration. Accordingly, the user is required to remember where the control portal of each multi-screen collaboration type is located. This increases memory costs of the user and reduces user experience.

### SUMMARY

Embodiments of this application provide a multi-device collaboration method, an electronic device, and a related product, so as to improve user experience of multi-device collaboration.

In a first aspect, an embodiment of this application provides a multi-device collaboration method. The method includes: A first electronic device displays a first page in response to a user operation, where the first page includes a device identifier of the first electronic device and a device identifier of at least one slave device; and the first electronic device establishes a multi-device collaboration with a first target device based on a first collaboration type in response to an operation of a user on a device identifier of the first target device in the first page, and displays a type switching card in the first page. The first target device is any one of the at least one slave device, and the type switching card includes a type identifier of at least one collaboration type supported between the first electronic device and the first target device.

According to the method provided in an embodiment of this application, the first page includes device identifiers of slave devices surrounding the first electronic device. In this way, the user can enable the first electronic device to establish a multi-device collaboration with any slave device by operating the device identifier of any slave device, and the user is not required to search for control portals of various collaboration types in different user interfaces, such that user experience is improved.

In an implementation, the method further includes: The first electronic device switches, in response to a click operation of a user on a type identifier of a second collaboration type in the type switching card, a collaboration type between the first electronic device and the first target device from the first collaboration type to the second collaboration type. The second collaboration type is any one of the at least one collaboration type, and the first collaboration type is different from the second collaboration type. In this way, in a case that the first electronic device and the first target device support a plurality of collaboration modes, the first electronic device can establish a multi-device collaboration with the first target device based on a preset collaboration type first. Then the user can select a desired collaboration type on the first electronic device. The first electronic device can switch the preset collaboration type to the desired collaboration type of the user based on the selection of the user. Thus, user experience is improved.

In an implementation, the method further includes: The first electronic device displays a second page in response to a user operation, where the second page includes a multi-device collaboration card, and in a case that the first electronic device finds the at least one slave device, the multi-device collaboration card includes the device identifier of the at least one slave device; the first electronic device initiates a multi-device collaboration to a second target device based on a third collaboration type in response to an operation of the user in the multi-device collaboration card, where the second target device is any one of the at least one slave device; and the first electronic device switches a device identifier of the second target device in the multi-device collaboration card to a collaboration identifier of the third collaboration type after establishing a multi-device collaboration with the second target device. In this way, the user can enable the first electronic device to establish a multi-device collaboration with any slave device by clicking on a device identifier of any slave device in the multi-device collaboration card, and is not required to find control portals of various collaboration types in different user interfaces, such that user experience is improved.

In an implementation, the method further includes: The first electronic device ends the multi-device collaboration between the first electronic device and the second target device in response to a click operation of the user on the collaboration identifier of the third collaboration type in the multi-device collaboration card. In this way, a user can directly end the established multi-device collaboration in the multi-device collaboration card, and is not required to find control portals of various collaboration types in different user interfaces, such that user experience is improved.

In an implementation, the method further includes: the multi-device collaboration card includes a first motion identifier in a case that the first electronic device finds no slave device and is currently searching for a slave device. The first motion identifier is used to indicate a state that the first electronic device is currently searching for a slave device. In this way, the first electronic device can feed back to a user a state of currently searching for a slave device, such that user experience is improved.

In an implementation, the method further includes: the multi-device collaboration card includes a first button in a case that the first electronic device finds no slave device and currently is not searching for a slave device; and the first electronic device searches for a slave device in response to a click operation of a user on the first button. In this way, the user can manually search for a slave device in a case that the first electronic device currently finds no slave device, such that user experience is improved.

In an implementation, the method further includes: The first electronic device determines whether the at least one slave device is found, before the second page is displayed and in a case that the first electronic device determines that a current scene is a first scene, where in a case that the at least one slave device is found, the second page includes the multi-device collaboration card, and the multi-device collaboration card includes the device identifier of the at least one slave device; or in a case that no slave device is found, the second page does not include the multi-device collaboration card. The first scene includes at least one of the following scenes: a scene that the first electronic device displays the second page for the first time after an operating system is initialized; a scene that the first electronic device displays the second page for the first time after a logged-in account changes; and a scene that the first electronic device displays the second page for the first time after factory settings are restored or data is cleared. In this way, in a case that the first electronic device finds no slave device when displaying the second page for the first time, the multi-device collaboration card may not be displayed, such that disturbance to the user is reduced, and user experience is improved.

In an implementation, that a first electronic device displays a first page in response to a user operation includes: The first electronic device displays the first page in response to the operation of the user in the multi-device collaboration card. In this way, the first electronic device can directly skip from the second page to the first page in response to the user operation such that the user can perform an operation of switching a collaboration type, etc. in the first page, and user experience is improved.

In an implementation, that the first electronic device displays the first page in response to the operation of the user in the multi-device collaboration card includes: The first electronic device displays the first page in response to a long-press operation of the user on a device identifier of any one of electronic devices in the multi-device collaboration card.

In an implementation, that the first electronic device displays the first page in response to the operation of the user in the multi-device collaboration card includes: The first electronic device displays the first page in response to a long-press operation of the user on the collaboration identifier of the third collaboration type in the multi-device collaboration card.

In an implementation, the multi-device collaboration card includes a second button. That the first electronic device displays the first page in response to the operation of the user in the multi-device collaboration card includes: The first electronic device displays the first page in response to a click operation of the user on the second button in the multi-device collaboration card.

In this way, the user can open the first page through a plurality of methods and manage a multi-device collaboration in the first page, such that user experience is improved.

In an implementation, that the first electronic device establishes a multi-device collaboration with a first target device based on a first collaboration type in response to an operation of a user on a device identifier of the first target device in the first page, and displaying a type switching card in the first page include: The first electronic device establishes the multi-device collaboration with the first target device based on the first collaboration type in response to a drag operation of the user on the device identifier of the first target device on the first page to make the device identifier of the first target device in contact with the device identifier of the first electronic device, and displays the type switching card in the first page.

In an implementation, the type switching card further includes a third button. The method further includes: The first electronic device breaks the multi-device collaboration with the first target device in response to a click operation of the user on the third button. In this way, the user can end the multi-device collaboration between the first electronic device and the first target device in the second page, such that user experience is improved.

In an implementation, the first page further includes a fourth button. The method further includes: The first electronic device displays a third page in response to a click operation of the user on the fourth button, where the third page includes a first list, and the first list includes an option of at least one collaboration type; the first electronic device displays a fourth page in response to a click operation of the user on a first option, where the first option is an option of any collaboration type in the first list, and the fourth page includes an on/off button of a collaboration type corresponding to the first option; and the first electronic device enables or disables the collaboration type corresponding to the first option in response to a click operation of the user on the on/off button. In this way, the user can control various collaboration types to be enabled or disabled, etc., such that user experience is improved.

In an implementation, the method further includes: The first electronic device generates a first switching card in response to the operation of the user on the device identifier of the first target device in the first page, in a state that the first electronic device has established a multi-device collaboration with a first slave device based on a fourth collaboration type, where the fourth collaboration type does not support a simultaneous connection of three electronic devices, and the first switching card is used to query the user whether to switch a collaboration device; and the first electronic device ends the multi-device collaboration with the first slave device in response to the operation of the user on the first switching card, and establishes the multi-device collaboration between the first electronic device and the first target device.

In an implementation, the method further includes: The first electronic device adds the first target device to the established multi-device collaboration in response to the operation of the user on the device identifier of the first target device in the first page, in a state that the first electronic device has established a multi-device collaboration with a first slave device based on a fifth collaboration type. The fifth collaboration type supports a simultaneous connection of three electronic devices.

In an implementation, the method further includes: The first electronic device generates a second switching card in response to the operation of the user on the device identifier of the first target device in the first page, in a state that the first electronic device has established a multi-device collaboration with an out-of-loop device, where the second switching card is used to query the user whether to switch a collaboration device; and the first electronic device ends the multi-device collaboration with the out-of-loop device in response to an operation of the user on the second switching card, and establishes the multi-device collaboration between the first electronic device and the first target device.

In an implementation, the method further includes: The first electronic device generates a third switching card in response to the operation of the user on the device identifier of the first target device in the first page, in a state that the first target device has established a multi-device collaboration with another slave device or an out-of-loop device based on a fourth collaboration type, where the fourth collaboration type does not support a simultaneous connection of three electronic devices, and the third switching card is used to query the user whether to switch a collaboration device; and the first electronic device ends, in response to an operation of the user on the third switching card, the multi-device collaboration established by the first target device, and establishes the multi-device collaboration between the first electronic device and the first target device.

In an implementation, the method further includes: The first electronic device joins, in response to the operation of the user on the device identifier of the first target device in the first page, the multi-device collaboration established by the first target device, in a state that the first target device has established a multi-device collaboration with another slave device or an out-of-loop device based on a fifth collaboration type, where the fifth collaboration type supports a simultaneous connection of three electronic devices.

In an implementation, the method further includes: The first electronic device generates a fourth switching card in response to the operation of the user on the device identifier of the first target device in the first page, in a state that the first target device has established a multi-device collaboration with another slave device or an out-of-loop device, where the fourth switching card is used to query the user whether to switch a collaboration device; and the first electronic device ends, in response to an operation of the user on the fourth switching card, the multi-device collaboration established by each of the first electronic device and the first target device, and establishes the multi-device collaboration between the first electronic device and the first target device.

In an implementation, the method further includes: The first electronic device generates a fifth switching card in response to the click operation of the user on the device identifier of the second target device in the multi-device collaboration card, in a state that the second target device has established a multi-device collaboration with another slave device or an out-of-loop device, where the fifth switching card is used to query the user whether to switch a collaboration device; and the first electronic device ends, in response to an operation of the user on the fifth switching card, the multi-device collaboration established by the second target device, and establishes the multi-device collaboration between the first electronic device and the second target device.

In this way, in a case that the first electronic device and/or a slave device establish a multi-device collaboration, the first electronic device may add or switch, by using different policies according to different scenes in response to an operation in a multi-device collaboration home page of the user, devices participating in the multi-device collaboration, such that user experience is improved.

In a second aspect, an embodiment of this application further provides a multi-device collaboration apparatus. The apparatus includes: a first display module, configured to display a first page in response to a user operation, where the first page includes a device identifier of the first electronic device and a device identifier of at least one slave device; and a second display module, configured to: establish a multi-device collaboration with the target device based on a first collaboration type in response to an operation of a user on a device identifier of a target device in the first page, and display a type switching card in the first page. The target device is any one of the at least one slave device, and the type switching card includes a type identifier of at least one collaboration type supported between the first electronic device and the target device.

According to the apparatus provided in an embodiment of this application, the first page includes device identifiers of slave devices surrounding the first electronic device. In this way, the user can enable the first electronic device to establish a multi-device collaboration with any slave device by operating the device identifier of any slave device, and the user is not required to search for control portals of various collaboration types in different user interfaces, such that user experience is improved.

In a third aspect, an embodiment of this application further provides a computer-readable storage medium. The computer-readable storage medium stores instructions. The instructions cause a computer to perform the methods in the above various aspects and implementations when running on the computer.

In a fourth aspect, an embodiment of this application further provides a computer program product including instructions. The instructions cause a computer to perform the methods in the above various aspects and implementations when running on the computer.

In a fifth aspect, an embodiment of this application further provides a chip system. The chip system includes a processor, configured to support the above terminal device to implement functions involved in the above aspects, for example, generate or process information involved in the above methods.

### BRIEF DESCRIPTION OF DRAWINGS

FIG. 1 is a schematic diagram of a hardware structure of an electronic device according to an embodiment of this application;
FIG. 2 is a block diagram of a software structure of an electronic device according to an embodiment of this application;
FIG. 3 is a first flow diagram of a multi-device collaboration method according to an embodiment of this application;
FIG. 4A is a first schematic diagram of a control center page according to an embodiment of this application;
FIG. 4B is a second schematic diagram of a control center page according to an embodiment of this application;
FIG. 4C is a third schematic diagram of a control center page according to an embodiment of this application;
FIG. 4D is a fourth schematic diagram of a control center page according to an embodiment of this application;
FIG. 5 is a first group of schematic interaction diagrams of a multi-device collaboration method according to an embodiment of this application;
FIG. 6 is a second group of schematic interaction diagrams of a multi-device collaboration method according to an embodiment of this application;
FIG. 7 is a third group of schematic interaction diagrams of a multi-device collaboration method according to an embodiment of this application;
FIG. 8 is a second flow diagram of a multi-device collaboration method according to an embodiment of this application;
FIG. 9A to FIG. 9D are a fourth group of schematic interaction diagrams of a multi-device collaboration method according to an embodiment of this application;
FIG. 10A to FIG. 10D are a fifth group of schematic interaction diagrams of a multi-device collaboration method according to an embodiment of this application;
FIG. 11A to FIG. 11D are a sixth group of schematic interaction diagrams of a multi-device collaboration method according to an embodiment of this application;
FIG. 12A to FIG. 12D are a seventh group of schematic interaction diagrams of a multi-device collaboration method according to an embodiment of this application;
FIG. 13A to FIG. 13C are schematic diagrams of methods for enabling or disabling an automatic collaboration service shown according to an embodiment of this application;
FIG. 14 is a schematic interaction diagram of scene 1 of a multi-device collaboration method according to an embodiment of this application;
FIG. 15 is a first schematic interaction diagram of sub-scene 1 of a multi-device collaboration method according to an embodiment of this application;
FIG. 16 is a second schematic interaction diagram of sub-scene 1 of a multi-device collaboration method according to an embodiment of this application;
FIG. 17 a schematic interaction diagram of sub-scene 2 of a multi-device collaboration method according to an embodiment of this application;
FIG. 18 is a first schematic interaction diagram of scene 3 of a multi-device collaboration method according to an embodiment of this application;
FIG. 19 is a second schematic interaction diagram of scene 3 of a multi-device collaboration method according to an embodiment of this application;
FIG. 20 is a schematic interaction diagram of scene 4 of a multi-device collaboration method according to an embodiment of this application;
FIG. 21 is another schematic interaction diagram of a multi-device collaboration method according to an embodiment of this application;
FIG. 22 is yet another schematic interaction diagram of a multi-device collaboration method according to an embodiment of this application;
FIG. 23 is a schematic structural diagram of a multi-device collaboration apparatus according to an embodiment of this application; and
FIG. 24 is a schematic structural diagram of another multi-device collaboration apparatus according to an embodiment of this application.

### DESCRIPTION OF EMBODIMENTS

Multi-device collaboration is a type of distributed technology applied to multiple electronic devices. Cross-system and cross-device collaboration between two or more electronic devices can be performed through the multi-device collaboration technology, so as to achieve resource sharing and collaborative operation.

The multi-device collaboration can be applied between electronic devices of the same type or different types. The electronic devices include but are not limited to a mobile phone, a tablet computer, a notebook computer, a large-screen device (such as a smart television and a smart screen), a personal computer (personal computer, PC), a handheld computer, a netbook, a personal digital assistant (personal digital assistant, PDA), a wearable electronic device, an onboard device, a virtual reality device, etc.

The multi-device collaboration is required to be implemented based on an inter-device communication connection. The communication connection may be a wired communication connection or a wireless communication connection. A solution of the wired communication connections may include, for example, a USB On-The-Go (OTG) technology. A solution of the wireless communication may include, for example, a wireless fidelity (wireless fidelity, Wi-Fi) technology, a Wi-Fi direct (Wi-Fi Direct) technology, a Bluetooth (Bluetooth, BT) technology, a near field communication (near field communication, NFC) technology, and an infrared (infrared, IR) technology.

As a terminal technology continuously grows, there are various collaboration types (also referred to as collaboration services) of multi-device collaboration, such as screen expansion, screen projection, a super call, screen mirroring, a multi-screen collaboration, a super notification, keyboard and mouse sharing, and a super keyboard and mouse. In the above collaboration types,
screen expansion: A screen of electronic device B is taken as a second screen of electronic device A, electronic device A can transfer some contents required to be displayed to the second screen for display, and the screen of electronic device A and the screen of electronic device B can co-display the contents, such that a display capability of electronic device A is expanded.

Screen projection: Contents (such as videos and photos) in the screen of electronic device A is delivered to the screen of electronic device B for display. During the screen projection, a user may choose to deliver some contents or all contents of the screen of electronic device A to the screen of electronic device B for display. Some screen projection methods further allow the user to switch a screen to other pages during screen projection such that electronic device B can still continue playing the delivered contents, such as DLNA screen projection.

Super call: When electronic device A receives an incoming call of a voice call or a video call, an incoming call interface can be synchronously displayed on electronic device B. In this way, the user can choose to answer or hang up the call on electronic device B.

Screen mirroring: All contents in the screen of electronic device A are fully displayed in the screen of electronic device B in a mirror image. The contents of electronic device A displayed in electronic device B are the same as the contents displayed by electronic device A, and change as the contents displayed by electronic device A change.

Multi-screen collaboration: A user interface of electronic device A is projected into the screen of electronic device B for display, and the user is allowed to operate the user interface of electronic device A in electronic device B. Moreover, by executing specific operations (such as an operation of dragging a file from a user interface of electronic device B to the user interface of electronic device A) in electronic device B, a file in electronic device B is transferred to electronic device A, such that cross-device operations and cross-device file transfer between electronic device A and electronic device B are achieved, etc. The user interface of electronic device A may be displayed in any area in the screen of electronic device B or may be displayed in a full screen.

Super notification: When electronic device A receives a notification message, the notification message may be synchronously displayed in electronic device B. Moreover, the user can also be allowed to reply, delete and read the notification message in electronic device B, etc.

Keyboard and mouse sharing: Electronic device A and electronic device B may share respective input devices, such as mice and keyboards. For example, an input device of electronic device A is shared with electronic device B, and the shared input device can perform an input in both electronic device A and electronic device B. In addition, a file can be transferred between electronic device A and electronic device B in a keyboard and mouse sharing type.

Super continuity: The user runs an application on electronic device A, and an interface of electronic device B can prompt the user to open an application currently running on electronic device A on electronic device B, such that the application is transferred to electronic device B for continued operations, such as video watching and document editing. For example, electronic device A is currently running a document application, and the document application may be a memo or word, etc. A user is currently editing a document on electronic device A. In a case that electronic device B is closer to electronic device A, electronic device B displays prompt information, and the user clicks on the prompt information on electronic device B. Electronic device B, in response to a click operation of a user, opens the document application and shows a position currently edited by the user, and the document application is transferred to electronic device B to continue being edited, etc.

In the plurality of collaboration types listed above, some collaboration types are initiated by a master device (generally an initiator of multi-device collaboration) to a slave device (generally a participant of the multi-device collaboration) in response to a user operation, and thus may be referred to as manual collaboration services or manual collaboration services, such as screen expansion, screen projection, screen mirroring, a multi-screen collaboration, and keyboard and mouse sharing. Some other collaboration types are automatically triggered when a triggering rule is satisfied in a state that a user enables a function, and thus may be referred to as automatic collaboration services or automatic collaboration services, such as a super call, a super notification, and a super continuity.

Collaboration types supported by two electronic devices are generally related to device types, screen sizes, device capabilities, etc. Thus, two electronic devices may support only one collaboration type or support a plurality of collaboration types.

With an example of a manual collaboration service,
if a master device is a mobile phone and a slave device is a tablet computer, a collaboration type supported thereby may include a multi-screen collaboration.

If a master device is a non-foldable-screen mobile phone and a slave device is a PC, a collaboration type supported thereby may include a super keyboard and mouse and a multi-screen collaboration. A default collaboration type may be a multi-screen collaboration when the non-foldable-screen mobile phone and the PC are first triggered to be connected.

If a master device is a foldable-screen mobile phone and a slave device is a PC, a collaboration type supported thereby may include a super keyboard and mouse, a multi-screen collaboration, screen mirroring and screen expansion. A default collaboration type may be a multi-screen collaboration when the foldable-screen mobile phone and the PC are first triggered to be connected.

If a master device is a mobile phone and a slave device is a large-screen device, a collaboration type supported thereby may include screen projection.

If a master device is a tablet computer and a slave device is a mobile phone, a collaboration type supported thereby may include a multi-screen collaboration.

If a master device is a tablet computer and a slave device is a PC, a collaboration type supported thereby may include screen mirroring, screen expansion and a super keyboard and mouse. A default collaboration type may be screen mirroring when the tablet computer and the PC are first triggered to be connected.

If a master device is a tablet computer and a slave device is a large-screen device, a collaboration type supported thereby may include screen projection.

If a master device is a PC and a slave device is a non-foldable-screen mobile phone, a collaboration type supported thereby may include a super keyboard and mouse and a multi-screen collaboration. A default collaboration type may be a multi-screen collaboration when the PC and the non-foldable-screen mobile phone are first triggered to be connected.

If a master device is a PC and a slave device is a foldable-screen mobile phone, a collaboration type supported thereby may include a super keyboard and mouse, a multi-screen collaboration, screen mirroring and screen expansion. A default collaboration type may be a multi-screen collaboration when the PC and the foldable-screen mobile phone are first triggered to be connected.

If a master device is a PC and a slave device is a tablet computer, a collaboration type supported thereby may include screen mirroring, screen expansion and a super keyboard and mouse. A default collaboration type may be screen mirroring when the PC and the tablet computer are first triggered to be connected.

If a master device is a PC and a slave device is a large-screen device, a collaboration type supported thereby may include screen projection.

With an example of an automatic collaboration service,
electronic devices supporting super calls may include a mobile phone, a tablet computer, a PC, a large-screen display device, etc.

Electronic devices supporting super notifications may include a mobile phone, a tablet computer, a PC, etc.

Electronic devices supporting super continuities may include a mobile phone, a tablet computer, a PC, a large-screen display device, etc.

In conventional solutions, a terminal device has no uniform control portal for all collaboration types, and control portals of the collaboration types are distributed in different user interfaces. For example, a control portal of screen projection may be located in a playing interface of a video application, and a control portal of a multi-screen collaboration may be located in a secondary page of a system setup application. Therefore, a user needs to find corresponding control portals in different user interfaces and operate the control portals to set up different types of multi-device collaboration. Accordingly, the user is required to remember where the control portal of each multi-screen collaboration type is located. This increases memory cost of the user and reduces user experience.

To solve the above problems, an embodiment of this application provides a multi-device collaboration method.

The multi-device collaboration method in the embodiment of this application can be applied to various types of electronic devices having display functions.

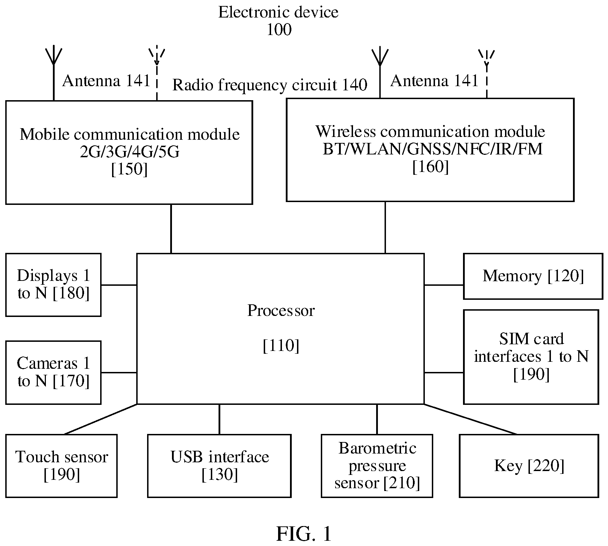

FIG. 1 is a schematic diagram of a hardware structure of an electronic device according to an embodiment of this application. The device may serve as a master device or a slave device in a multi-device collaboration. As shown in FIG. 1, the electronic device 100 may include a processor 110, a memory 120, a universal serial bus (universal serial bus, USB) interface 130, a radio frequency circuit 140, a mobile communication module 150, a wireless communication module 160, a camera 170, a display 180, a touch sensor 190, a barometric pressure sensor 210, a key 220, etc.

The processor 110 may include one or more processing units. For example, the processor 110 may include an application processor (application processor, AP), a modem, a graphics processing unit (graphics processing unit, GPU), an image signal processor (image signal processor, ISP), a video codec, a digital signal processor (digital signal processor, DSP), a baseband processor, and/or a neural-network processing unit (neural-network processing unit, NPU), etc. Different processing units may be independent devices, or may be integrated into one or more processors, for example, integrated into a system on a chip (system on a chip, SoC). A memory may be further arranged in the processor 110 and is configured to store instructions and data. In some embodiments, the memory in the processor 110 is a buffer memory. The memory may store instructions or data recently used or cyclically used by the processor 110.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, etc.

The memory 120 may be configured to store a computer-executable program code, and the executable program code includes instructions. The memory 120 may include a program storage area and a data storage area. The program storage area may store an operating system, an application required for at least one function (such as a sound playing function and an image playing function), etc. The data storage area may store data (such as audio data and a telephone book), etc. established when the electronic device 100 is used. The memory 120 may include one or more storage units, for example, may include a volatile memory (volatile memory), such as a dynamic random access memory (dynamic random access memory, DRAM) and a static random access memory (static random access memory, SRAM); and may further include a non-volatile memory (non-volatile memory, NVM), such as a read-only memory (read-only memory, ROM) and a flash memory (flash memory). The processor 110 performs various functional applications and data processing of the electronic device 100 by running instructions stored in the memory 120 and/or instructions stored in a memory arranged in the processor.

It is required to be supplemented herein that the operating system referred in an embodiment of this application includes but is not limited to an Android operating system, an IOS, an iPad OS, a Harmony operating system (Harmony OS), a Windows operating system, a Linux operating system, a MAC OS, an embedded system, etc.

A wireless communication function of the electronic device 100 may be implemented by using a radio frequency circuit 140, a mobile communication module 150, a wireless communication module 160, a modem, a baseband processor, etc.

The radio frequency circuit 140 may include at least one antenna 141, configured to transmit and receive an electromagnetic wave signal. Each antenna of the electronic device 100 may be configured to cover one or more communication frequency bands. In some embodiments, the antenna may be used in combination with a tuning switch.

The mobile communication module 150 may provide a solution including wireless communication such as a 2G/3G/4G/5G of an application on the electronic device 100. The mobile communication module 150 may include at least one filter, a switch, a power amplifier, a low noise amplifier (low noise amplifier, LNA), etc. The mobile communication module 150 may receive an electromagnetic wave by the antenna 141, filter and amplify the received electromagnetic wave, etc., and transmit the electromagnetic wave to the modem for demodulation. The mobile communication module 150 may further amplify a signal modulated by the modem, and convert the signal to an electromagnetic wave by the antenna 141 for radiation. In some embodiments, at least some function modules of the mobile communication module 150 may be arranged in the processor 110. In some embodiments, at least some functional modules of the mobile communication module 150 may be arranged in a same device as at least some modules of the processor 110.

The modem may include a modulator and a demodulator. The modulator is configured to modulate a to-be-transmitted low-frequency baseband signal to a medium-high-frequency signal. The demodulator is configured to demodulate the received electromagnetic wave signal to a low-frequency baseband signal. Then the demodulator transfers the low-frequency baseband signal obtained through demodulation to a baseband processor for processing. The low-frequency baseband signal is transmitted to an application processor after being processed by the baseband processor. The application processor outputs a sound signal by using an audio device (including but not limited to a speaker, a telephone receiver, etc.), or displays an image or a video by using a display 180. In some embodiments, the modem may be an independent device. In some other embodiments, the modem may be independent of the processor 110, and is arranged in a same device as the mobile communication module 150 or other functional modules.

The wireless communication module 160 may include a wireless fidelity (wireless fidelity, Wi-Fi) module, a Bluetooth (Bluetooth, BT) module, a global navigation satellite system (GNSS) module, a near field communication (near field communication, NFC) module, an infrared (infrared, IR) module, etc. The wireless communication module 160 may be one or more devices integrating at least one of the above modules. The wireless communication module 160 receives an electromagnetic wave by using the antenna 141, modulates a frequency of an electromagnetic wave signal or filters an electromagnetic wave signal, and transmits a processed signal to the processor 110. The wireless communication module 160 may further receive a to-be-transmitted signal from the processor 110, modulate a frequency of and amplify the to-be-transmitted signal, and convert the to-be-transmitted signal to an electromagnetic wave by the antenna 141 for radiation.

In an embodiment of this application, the wireless communications function of the electronic device 100 may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5th generation mobile networks new radio (5th generation mobile networks new radio, 5G NR), BT, a GNSS, a wireless local area network (WLAN), NFC, frequency modulation (FM), and/or an IR technology, etc. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS) and/or a satellite based augmentation systems (satellite based augmentation systems, SBAS).

The camera 170 is configured to capture a static image or video. The camera 170 includes a lens and a photosensitive element, and an optical image of an object is generated by using a lens to be projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal to an electrical signal, and then transfers the electrical signal to the ISP to convert the electrical signal to a digital image signal. The ISP outputs the digital image signal to the DSP for processing. The DSP converts the digital image signal to an image signal in an RGB, YUV, RYYB format, etc. In some embodiments, the electronic device 100 may include 1 or N cameras 170, and N is a positive integer greater than 1.

The NPU is a neural-network (neural-network, NN) computing processor that rapidly processes input information by referring to a biological neural network structure, for example, by referring to a transmission mode between human brain neurons, and can further continuously perform self-learning. The NPU can implement an application such as intelligent cognition of the electronic device 100, such as image recognition, facial recognition, voice recognition and text understanding.

The display 180 is configured to display an image, a video, etc. The display 180 includes a display panel. A liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a MiniLED, a MicroLED, a Micro-OLED, a quantum dot light emitting diodes (quantum dot light emitting diodes, QLED), etc. may be used as the display panel. In some embodiments, the electronic device 100 may include 1 or N displays 180, and N is a positive integer greater than 1.

The touch sensor 190 is also referred to as a touch device. The touch sensor 190 may be arranged on the display 180, and the touch sensor 190 and the display 180 form a touchscreen. The touch sensor 190 is configured to detect a touch operation on or near the touch sensor. The touch sensor may transmit the detected touch operation to the application processor so as to determine a touch event type. Visual output related to the touch operation may be provided by using the display 180. In some other embodiments, the touch sensor 190 may be arranged on a surface of the electronic device 100, and is located at a different position from the display 180.

The barometric pressure sensor 210 is configured to measure a barometric pressure. In some embodiments, the electronic device 100 computes an altitude by using a barometric pressure value measured by the barometric pressure sensor 210, so as to assist positioning and navigation.

The key 220 includes a power key, a volume key, etc. The key 220 may be a mechanical key, or a touch key. The electronic device 100 may receive key input, and generate key signal input related to user settings and function control of the electronic device 100.

It can be understood that a schematic structure in an embodiment of this application does not constitute a specific limitation on the electronic device 100. In some other embodiments of this application, the electronic device may include more or fewer assemblies than those shown in the figures, combine some assemblies, split some assemblies, or differently arrange assemblies. The assemblies shown in the figures may be implemented as hardware, software, or their combination.

Each method step of a multi-device collaboration method provided in an embodiment of this application will be exemplarily described below.

A software system of the electronic device 100 may use a layered architecture, an event-driven architecture, a micro kernel architecture, a micro service architecture, or a cloud architecture. In an embodiment of the present invention, a software structure of the electronic device 100 will be exemplarily described with an example of an android system having a layered architecture.

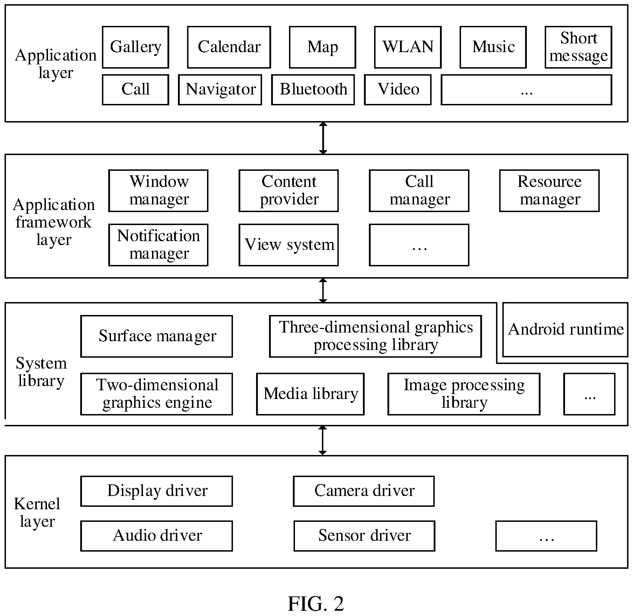

FIG. 2 is a block diagram of a software structure of an electronic device 100 according to an embodiment of this application.

Software is divided into several layers by a layered architecture, and each layer has a clear role and task. The layers are in communication with each other through a software interface. In some embodiments, the Android system is divided into four layers, which are an application layer, an application framework layer, an android runtime (Android runtime) and system library, and a kernel layer from top to bottom.

The application layer may include a series of application packages.

As shown in FIG. 2, the application packages may include applications such as a camera, a gallery, a calendar, a call, a map, a navigator, a WLAN, a Bluetooth, music, a video and a short message.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, etc.

The window manager is configured to manage a window application. The window manager may acquire a size of a display, determine whether there is a state bar, lock a screen, take a screenshot, etc.

The content provider is configured to store and obtain data and make the data accessible to an application. The data may include a video, an image, an audio, calls that are made and answered, a browsing history, a bookmark, a phonebook, etc.

The view system includes visual controls such as a control for displaying a text and a control for displaying an image. The view system may be configured to establish an application. A display interface may be composed of one or more views. For example, a display interface including a short message notification icon may include a view for displaying a text and a view for displaying a picture.

The mobile phone manager is configured to provide a communication function for the electronic device 100, such as call state management (including put-through and hang-up management, etc.).

The resource manager provides various resources for an application, such as a localized character string, an icon, an image, a layout file, and a video file.

The notification manager enables an application to display notification information in the state bar that may be configured to convey a message of a notification type, and the message may automatically disappear after a short stay without user interaction. For example, the notification manager is configured to provide a notification of download completion, a message notification, etc. The notification manager may be further a notification that appears on a top state bar of a system in the form of a graph or a scroll bar text, for example, a notification of an application running on a background, or a notification that appears on a screen in the form of a dialog window. For example, text information appears in the state bar for prompt, a prompt tone is made, the electronic device vibrates, or an indicator light flashes.

Android Runtime includes a kernel library and a virtual machine. The Android Runtime is responsible for scheduling and managing the android system.

The kernel library includes two parts: one part is a performance function that a java language needs to invoke, and the other part is a kernel library of android.

The application layer and the application framework layer run in the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of function modules, such as a surface manager (surface manager), media libraries (Media Libraries), a three-dimensional graphics processing library (such as an open graphics library for embedded system (OpenGL ES)), and a two-dimensional graphics engine (such as a skia graphics library (SGL)).

The surface manager is configured to manage a display subsystem, and provide fusion of two-dimensional (2D) and three-dimensional (3D) layers to a plurality of applications.

The media library supports reproduction and recording of a plurality of common audio and video formats, and static image files, etc. The media library can support a plurality of audio and video encoding formats, such as MPEG4, H.264, MP3, AAC, AMR, JPG and PNG.

The three-dimensional graphics processing library is configured to implement three-dimensional graphics drawing, image rendering, composition, layer processing, etc.

The two-dimensional graphics engine is a drawing engine for two-dimensional drawings.

The kernel layer is a layer between hardware and software. The kernel layer includes at least a display driver, a camera driver, an audio driver and a sensor driver.

To enable those skilled in the art to understand the technical solution of an embodiment of this application, an embodiment of this application classifies electronic devices that may be involved in various scenes of multi-device collaboration. The electronic devices include but are not limited to being classified into: a master device, a slave device and an out-of-loop device.

In the above devices, the master device includes: a device that currently held of a user, the user can perform an operation on the master device, so as to initiate a multi-device collaboration to other devices, such that the master device is also generally a device that initiates a multi-device collaboration. The multi-device collaboration method provided in an embodiment of this application may be implemented in a master device.

The slave device includes: a device that is located near the master device and logs in the same account as the master device. The master device and the slave device are generally electronic devices manufactured by the same manufacturer. For example, the master device may be a mobile phone manufactured by manufacturer A, and the slave device may be a tablet computer manufactured by manufacturer A, etc. Accounts that the master device and the slave device log in may be accounts that the user applies from the device manufacturer.

The out-of-loop device includes: a device that is manufactured by the same device manufacturer as the master device but does not log in the same account as the master device, devices manufactured by other specific manufacturers, and specific types of devices manufactured by other manufacturers, such as large-screen devices.

The multi-device collaboration method provided in an embodiment of this application may be implemented in a master device. For example, a master device can perform all steps of a multi-device collaboration method in response to one or more operations performed by a user.

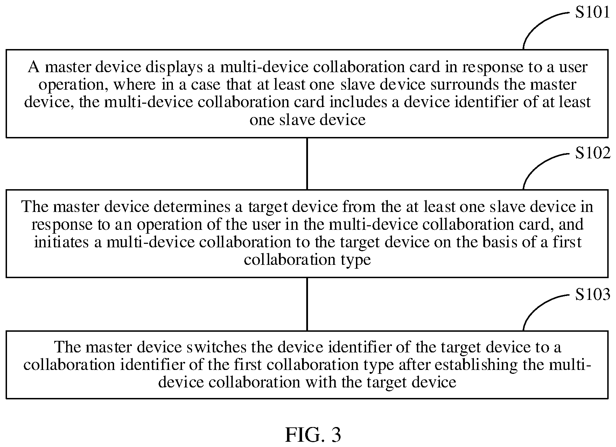

FIG. 3 is a first flow diagram of a multi-device collaboration method according to an embodiment of this application.

As shown in FIG. 3, in an implementation, the method may include S101 to S103 as follows:

S101: A master device displays a multi-device collaboration card in response to a user operation, where in a case that at least one slave device surrounds the master device, the multi-device collaboration card includes a device identifier of the at least one slave device.

During specific implementation, the multi-device collaboration card may be located in a control center page of the master device, a leftmost home screen page of the master device, a home screen page of the master device, or other pages. A position of the multi-device collaboration card is not specifically limited in an embodiment of this application.

With an example in which the multi-device collaboration card is located in the control center page of the master device,
the master device may display the control center page in response to a first operation performed by a user on any page. It can be understood that this application does not limit a specific method of the first operation. For example, the first operation may be an operation of sliding down at a top edge of a display by a finger of a user, an operation of sliding up at a bottom edge of the display by the finger of the user, or other operations. In some other implementations, when a finger of a user slides down at a top edge of a display, if the finger of the user slides down at a left half edge of a top of the display, a notification center page will be called out. If the finger of the user slides down at a right half edge of a top of the display, a control center page will be called out, which all fall within the scope of protection of embodiments of this application.

In an implementation, to determine whether a slave device surrounds the master device, before S101 and/or after S101, the master device can transmit a Bluetooth broadcast to surroundings at preset time intervals (that is, preset periods), so as to search for a slave device that may be arranged in the surroundings. The Bluetooth broadcast may be a classic Bluetooth broadcast or a Bluetooth low energy (Bluetooth Low Energy, BLE) broadcast. This is not limited in an embodiment of this application. If a slave device surrounds the master device, the slave devices may transmit a broadcast message to the master device after receiving the Bluetooth broadcast of the master device. If the master device receives a response message of the slave device, it can be determined that a slave device is arranged.

It can be understood that since the master device searches for a slave device at intervals, when the master device displays the control center page in response to the user operation, in a case of searching for a slave device, there may be three cases as follows:
a first case that the master device finds one or more slave devices;
a second case that the master device finds no slave device, and is currently searching for a slave device; and
a third case that the master device finds no slave device, and currently is not searching for a slave device.

In the above three cases, when the master device displays the control center page in response to the user operation, contents displayed in the multi-device collaboration card may be different, which will be exemplarily described below in combination with accompanying drawings.

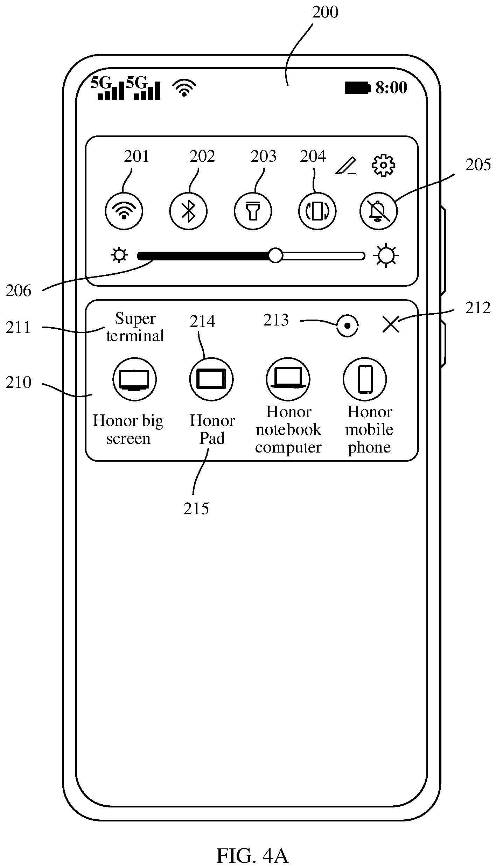

FIG. 4A is a first schematic diagram of a control center page according to an embodiment of this application.

As shown in FIG. 4A, in an implementation, the control center page 200 may include one or more function on/off buttons, such as a Wi-Fi on/off button 201, a Bluetooth on/off button 202, a flashlight on/off button 203, a vibration on/off button 204, and a mute on/off button 205. When a user clicks an on/off button, the master device may enable or disable a corresponding function.

The control center page 200 may further include one or more slide controls, such as a slide control 206 configured to adjust brightness of a display. When the user drags a slider in the slide control 206, the master device may adjust the brightness of the display.

The control center page 200 may further include a multi-device collaboration card 210. The multi-device collaboration card 210 may include a card name 211, and one or more clickable elements such as a close icon 212 of the multi-device collaboration card 210, and a portal button 213 of the multi-device collaboration home page. Details about the multi-device collaboration home page will be described in detail below.

The above card name is merely an example of this application, and the function of the multi-device collaboration may be further referred to as other names, which are not limited in this application. For example, the names may be: "Honor interconnection" and "super terminal". Therefore, the card name 211 displayed in the multi-device collaboration card 210 may be "Honor interconnection", "super terminal", etc. Accordingly, a multi-device collaboration home page may be further referred to as an Honor interconnection home page or a super terminal home page.

As further shown in FIG. 4A, in the first scene described above, if the master device finds one or more slave devices when displaying the control center page 200, the master device may directly display a search result in the multi-device collaboration card 210 when displaying the control center page 200. For example, the multi-device collaboration card 210 may include device identifiers 214 of one or more slave devices found by the master device. The device identifier 214 of the slave device may be a graphical identifier such as an icon or other skeuomorph elements. For example, the icon of the slave device may be taken as the device identifier 214 of the slave device, or a blister-shaped element wrapping the icon of the slave device may be taken as the device identifier 214 of the slave device. This is not limited in an embodiment of this application.

By displaying the device identifier 214 of the slave device in the multi-device collaboration card 210, the user can learn which slave device currently surrounds the master device and can carry out a multi-device collaboration, and a type of each slave device. For example, if the device identifier 214 of the slave device is a tablet computer icon, the user may learn that the slave device is a tablet computer. If the device identifier 214 of the slave device is a large-screen device icon, the user can learn that the slave device is a large-screen device. If the device identifier 214 of the slave device is a mobile phone icon, the user can learn that the slave device is a mobile phone.

The multi-device collaboration card 210 may further include a device name 215 of each slave device. The device name may be displayed in collaboration with a device identifier 214 corresponding thereto. For example, the device name 215 may be displayed above, below, or at other positions of the device identifier 214 corresponding thereto. In an embodiment of this application, the device name 215 may be a product name of a slave device, such as Honor Smart TV, Honor Pad and Honor Magic Book. The device name 215 may also be a user-defined name such as Honor pad of Xiao Li, or Honor smart screen in living room. This is not limited in an embodiment of this application.

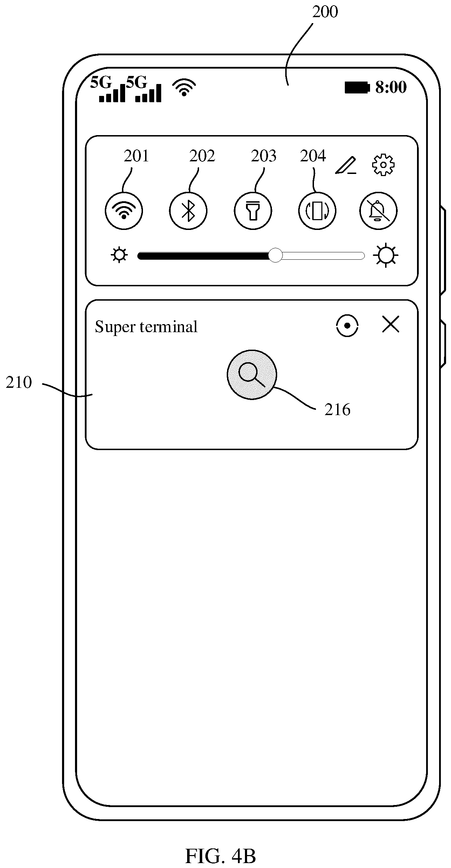

FIG. 4B is a second schematic diagram of a control center page according to an embodiment of this application.

As shown in FIG. 4B, in the second case described above, if when displaying the control center page 200, the master device finds no slave device and is currently searching for a slave device, when displaying the control center page 200, the master device may display a page element of searching for a slave device in the multi-device collaboration card 210. For example, the multi-device collaboration card 210 may include a motion identifier having a search pattern 216, and a state of currently searching for a slave device by the master device is expressed in a skeuomorph manner by using the motion identifier.

Then, if the master device finds a slave device, a device identifier and a device name of the found slave device may be displayed in the multi-device collaboration card 210. In this case, the multi-device collaboration card 210 may be displayed in a style shown in FIG. 4A.

It can be understood that in a case that a plurality of slave devices surround the master device, the master device may find different slave devices in sequence. In this case, every time the master device finds a slave device, a device identifier and a device name of the slave device will be displayed in the multi-device collaboration card 210. When a plurality of slave devices are found in sequence, device identifiers of the plurality of slave devices may be arranged in sequence according to a finding order. In addition, in a process of searching for a slave device, if a slave device is found, the master device may not display a device identifier and a device name of the slave device immediately, but may wait until search is ended (for example, search timeout occurs) and then displays device identifiers and device names of all found slave devices in the multi-device collaboration card 210.

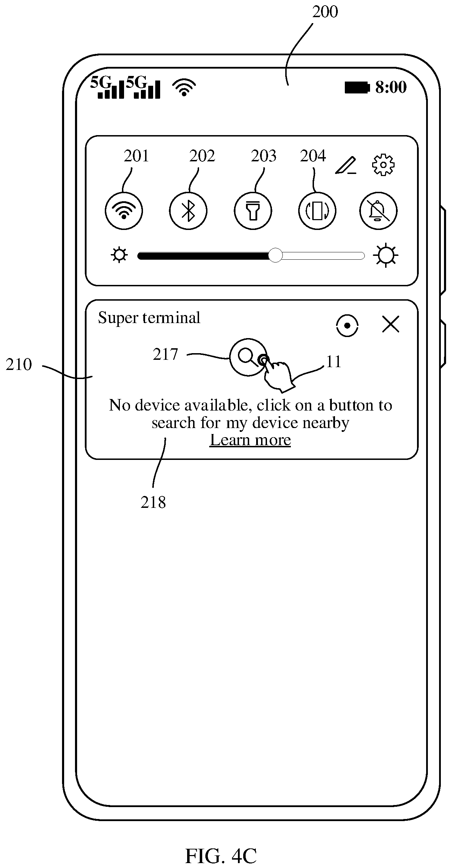

FIG. 4C is a third schematic diagram of a control center page according to an embodiment of this application.

As shown in FIG. 4C, in the third case described above, if when displaying the control center page 200, the master device finds no slave device and currently is not searching for a slave device, when displaying the control center page 200, the master device may display a page element configured to guide a user to actively search for a slave device in the multi-device collaboration card 210. For example, the multi-device collaboration card 210 may include a search button 217, and prompt information 218 configured to guide a user to click a search button 217 to actively search for a slave device.

When detecting that the user clicks 11 the search button, the master device may start, in response to the click operation of the user, searching for a slave device, for example, transmitting a Bluetooth broadcast to surroundings, and monitoring a response message of the slave device for the Bluetooth broadcast. After the master device starts searching for a slave device, the multi-device collaboration card 210 may be changed to a style shown in FIG. 4B.

Then, if the master device finds a slave device, a device identifier and a device name of the found slave device may be displayed in the multi-device collaboration card 210. In this case, the multi-device collaboration card 210 may be displayed in a style shown in FIG. 4A.

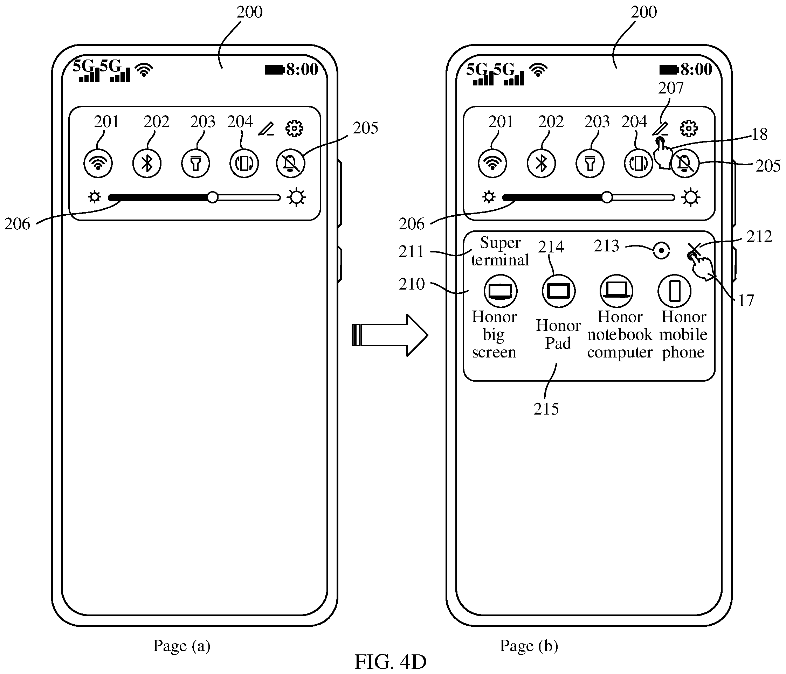

FIG. 4D is a fourth schematic diagram of a control center page according to an embodiment of this application.

As shown in page (a) of FIG. 4D, in an implementation, if the master device finds no slave device when displaying the control center page 200, and the master device currently displays the control center page 200 for the first time, the master device may not display the multi-device collaboration card 210 when initially displaying the control center page 200. The case that the master device displays the control center page 200 for the first time may occur in scenes including but not limited to scenes as follows:
Scene 1: The master device displays the control center page 200 for the first time after an operating system is initialized. For example, the master device is a brand new device. After the master device is first powered on, a user initializes the master device, and then operates the master device to display the control center page 200 for the first time.
Scene 2: The master device displays the control center page 200 for the first time after a logged-in account is changed. For example, after user A exits his account from the master device, the master device is given to user B for use. User B logs in a new account on the master device, and then user B operates the master device to display the control center page 200 for the first time.
Scene 3: The master device displays the control center page 200 for the first time after factory settings are restored or data is cleared.

As shown in page (a) of FIG. 4D, in an implementation, when the control center page 200 does not include the multi-device collaboration card 210, the control center page may include one or more function on/off buttons, such as a Wi-Fi on/off button 201, a Bluetooth on/off button 202, a flashlight on/off button 203, a vibration on/off button 204, and a mute on/off button 205. When a user clicks an on/off button, the master device may enable or disable a corresponding function. The control center page 200 may further include one or more slide controls, such as a slide control 206 configured to adjust brightness of a display.

As shown in page (a) of FIG. 4D, in an implementation, if the master device does not find a slave device thereafter, it indicates that an environment in which a user is currently located may not be conditioned for a multi-device collaboration, and the user may not be a potential user for the multi-device collaboration. Therefore, the master device may continue not displaying the multi-device collaboration card 210, such that a card not required of the user does not appear in the control center page 200, and distraction to the user is avoided.

As shown in page (b) of FIG. 4D, in an implementation, if the master device finds a slave device thereafter, it indicates that an environment in which a user is currently located is conditioned for a multi-device collaboration, and the user may be a potential user for the multi-device collaboration. Therefore, the master device may display a multi-device collaboration card 210 in the control center page 200. The multi-device collaboration card 210 may include a card name 211, and one or more clickable elements, such as a close icon 212 of the multi-device collaboration card 210, and a portal button 213 of the multi-device collaboration home page.

If the master device displays the multi-device collaboration card 210 in the control center page 200 for the first time, the master device can directly display the multi-device collaboration card 210 when displaying the control center page 200 next time. The multi-device collaboration card 210 may be in one of the styles in FIG. 4A-FIG. 4C according to three states in which the master device searches for slave devices.

As shown in FIG. 4D, in an implementation, the master device may further close the multi-device collaboration card 210 in response to a click 17 operation of a user on a close icon 212 in the multi-device collaboration card 210. If the user closes the multi-device collaboration card 210, the master device may not display the multi-device collaboration card 210 when displaying the control center page 200 next time. Alternatively, the master device may determine whether a number of times that a user continuously closes the multi-device collaboration card 210 within a preset period of time is greater than or equal to a first threshold. If the number is greater than or equal to the first threshold, the master device does not display the multi-device collaboration card 210 when displaying the control center page 200 next time. If the number is less than the first threshold, the master device continues displaying the multi-device collaboration card 210 when displaying the control center page 200 next time. For example, in cases that the preset period of time is 24 hours (one day) and the first threshold is 2, if the user closes the multi-device collaboration card 210 2 consecutive times within 24 hours, the master device does not display the multi-device collaboration card 210 when displaying the control center page 200 next time.

In an implementation, the control center page 200 may further include an edit icon 207. If a user attempts to restore the multi-device collaboration card 210 to a display state, the user may click 18 on the edit icon 207 at a control center. The master device may enter an edit page of the control center in response to a click 18 operation of the user on the edit icon 207. In this way, the user can configure contents displayed by the control center at the edit page of the control center, for example, restore the multi-device collaboration card 210 to a display state.

In an implementation, after the multi-device collaboration card 210 is closed, if the user closes the control center and thereafter opens the control center again through an operation of sliding downwards at a top edge of the display by a finger, etc., the master device may restore, in a case of finding a slave device arranged at surroundings, the multi-device collaboration card 210 to a display state. If the master device finds no slave device, the multi-device collaboration card 210 may be kept in a disabled state.

S102: The master device determines a target device from the at least one slave device in response to an operation of the user in the multi-device collaboration card 210, and initiates a multi-device collaboration to the target device based on a first collaboration type.

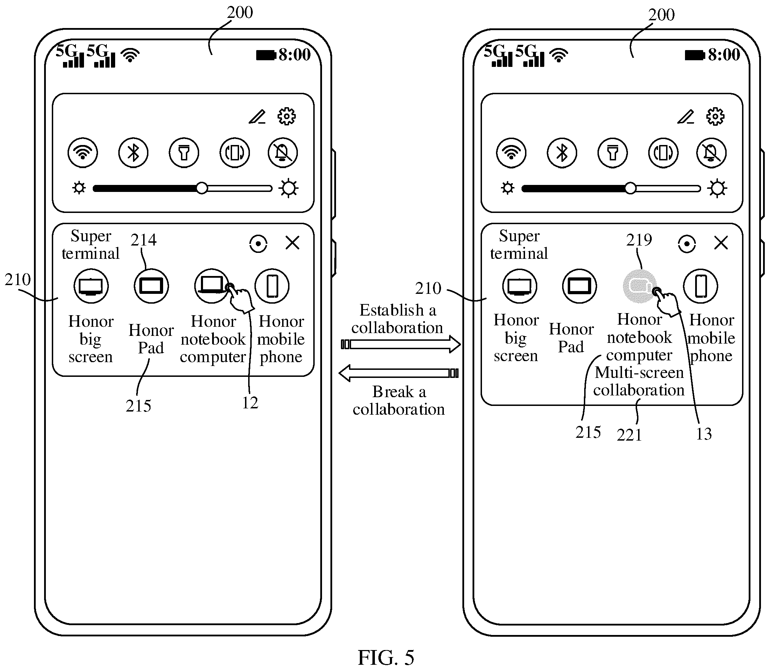

FIG. 5 is a first group of schematic interaction diagrams of a multi-device collaboration method according to an embodiment of this application.

As shown in FIG. 5, if a user attempts to establish a multi-device collaboration between a master device and a slave device that is found, one or more preset operations may be performed on the device identifier of the slave device in the multi-device collaboration card 210, such as a click 12 operation on the device identifier 214 of the slave device. The master device may determine the slave device as the target device in response to the click 12 operation of the user on the device identifier 214 of the slave device, and initiate a multi-device collaboration to the target device based on the first collaboration type.

In this case, if only one collaboration type is supported between the master device and the target device, the collaboration type is the first collaboration type. If a plurality of collaboration types are supported between the master device and the target device, the first collaboration type may be one of the collaboration types supported between the master device and the target device.

In a possible implementation, scenes of a plurality of collaboration types supported between the master device and the target device are as follows: a case that if the master device establishes a multi-device collaboration with the target device for the first time, the first collaboration type may be a default two-device collaboration type; and a case that if the master device establishes a multi-device collaboration with the target device not for the first time, the first collaboration type may be the collaboration type that is used when both parties establish a multi-device collaboration last time, or may be a default two-device collaboration type.

In general, a default collaboration type may be preset between the master device and each type of electronic device, and default collaboration types between the master device and different types of electronic devices may be different. For example, if the master device is a mobile phone and the target device is a tablet computer, a default collaboration type may be a multi-screen collaboration. If the master device is a mobile phone and the target device is a large-screen device, a default collaboration type may be screen projection. If the master device is a PC and the target device is a PC, a default collaboration type may be screen mirroring. The master device may prestore a default collaboration type between the master device and each type of electronic device, for example, store the default collaboration type in a local master device or a cloud.

S103: The master device switches the device identifier of the target device to a collaboration identifier of the first collaboration type after establishing the multi-device collaboration with the target device.

As shown in FIG. 5, the collaboration identifier 219, similar to the device identifier 214, may also be a graphical identifier, such as an icon, or other skeuomorph elements, etc. For example, if the master device establishes a multi-screen collaboration with the target device, the master device may switch the device identifier of the target device to a multi-screen collaboration identifier. If the master device establishes screen mirroring with the target device, the master device may switch the device identifier of the target device to a screen mirroring identifier. In this way, the user can intuitively understand the collaboration type established between the master device and the target device in the multi-device collaboration card 210.

In an implementation, after the master device establishes the multi-device collaboration with the target device, the type name 221 of the first collaboration type may be further displayed in the multi-device collaboration card 210. The type name 221 of the first collaboration type and the device name 215 of the target device may be displayed in a concentrated manner, for example, the type name 221 of the first collaboration type and the device name 215 of the target device may be displayed in the same row and adjacent to each other, or the type name 221 of the first collaboration type and the device name 215 of the target device may be displayed in the same column and adjacent to each other.

As shown in FIG. 5, with an example in which the target device is an Honor notebook computer and the first collaboration type is a multi-screen collaboration, after the master device establishes a multi-screen collaboration with the Honor notebook computer, the master device may switch the device identifier of the Honor notebook computer in the multi-device collaboration card 210 to a multi-screen collaboration identifier and add type name "multi-screen collaboration" below device name "Honor notebook computer". In this way, the user can intuitively learn that the master device establishes a multi-screen collaboration with an Honor Pad in the multi-device collaboration card 210.

In an implementation, the master device may display the device identifier 214 of each slave device as a predetermined color, such as a first color, in the multi-device collaboration card 210. If the master device establishes a multi-device collaboration with the target device based on the first collaboration type, the master device may display the collaboration identifier 219 of the first collaboration type as another predetermined color, such as a second color, in the multi-device collaboration card 210. In this way, the user can distinguish through different colors which slave device establishes a multi-device collaboration with the master device and which slave device does not establish a multi-screen collaboration with the master device.

As shown in FIG. 5, in an implementation, after establishing the multi-device collaboration with the target device, the master device may further break the multi-device collaboration with the target device in response to a click 13 operation of the user on the collaboration identifier 219 of the first collaboration type. After the master device breaks the multi-device collaboration with the target device, the collaboration identifier 219 of the first collaboration type may be switched back to the device identifier of the target device. In this way, the multi-device collaboration card 210 may restore to a style before the multi-device collaboration is established.

According to the method provided in an embodiment of this application, a multi-device collaboration card is added to a control center page of a master device, and the multi-device collaboration card includes device identifiers of slave devices surrounding the master device. In this way, a user can enable the master device to establish a multi-device collaboration with any slave device by clicking on the device identifier of any slave device, and is not required to search for control portals of various collaboration types in different user interfaces, such that user experience is improved.

In some embodiments, the master device may further display a multi-device collaboration home page in response to an operation on the multi-device collaboration card of the user. Contents included in the multi-device collaboration home page may be different in two cases that the master device has established a multi-device collaboration with the target device and that the master device does not establish a multi-device collaboration with the target device, and will be exemplarily described below in combination with accompanying drawings.

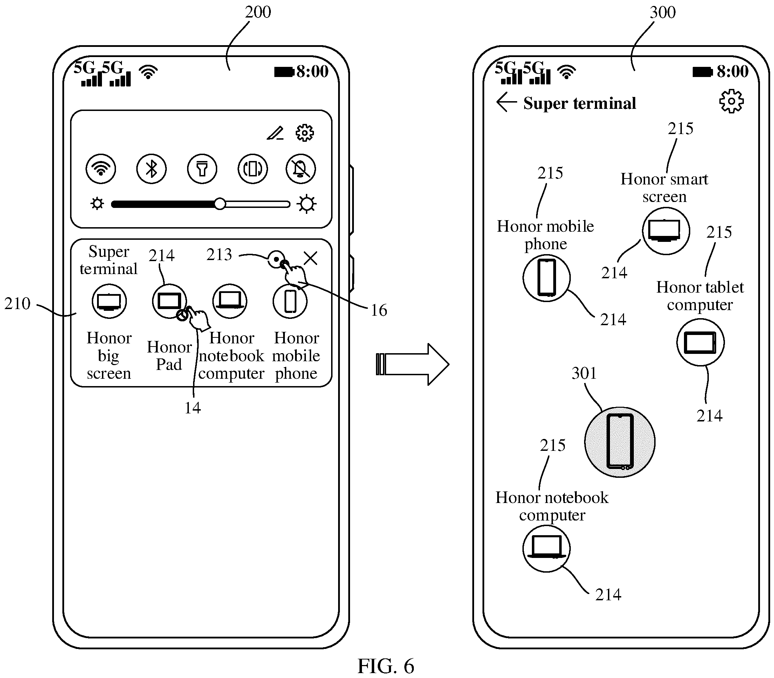

FIG. 6 is a second group of schematic interaction diagrams of a multi-device collaboration method according to an embodiment of this application.

As shown in FIG. 6, in a case that the master device does not establish a multi-device collaboration with the target device, if the user attempts to open the multi-device collaboration home page 300, a long-press 14 operation can be performed on the device identifier 214 of any slave device in the multi-device collaboration card 210. The master device may display the multi-device collaboration home page 300 in response to a long-press 14 operation of the user on the device identifier 214 of any slave device.

As shown in FIG. 6, in a case that the master device does not establish a multi-device collaboration with the target device, if the user attempts to open the multi-device collaboration home page 300, a click operation can be performed on a portal button 213 in the multi-device collaboration card 210. The master device may display the multi-device collaboration home page 300 in response to a click 16 operation of the user on the portal button 213.

As shown in FIG. 6, in a case that the master device does not establish a multi-device collaboration with the target device, the multi-device collaboration home page 300 may include the device identifier 301 of the master device and the device identifier 214 of each slave device. The device identifier 301 of the master device may be located in a central area of the multi-device collaboration home page 300, for example, located in a center, a lower area of the center, or an upper area of the center of the multi-device collaboration home page 300. This is not limited in an embodiment of this application. The device identifiers 214 of the slave devices may be distributed on a periphery of the device identifier 301 of the master device.

In an implementation, the device identifier 301 of the master device is located in a lower area of a center of the multi-device collaboration home page 300. Device identifiers 214 of all slave devices, such as device identifiers of tablet computers, device identifiers of large-screen devices, device identifiers of PCs, and device identifiers of mobile phones may be distributed surrounding the device identifier 301 of the master device in a planetary shape. In addition, the device identifiers 214 of the slave devices may also be distributed above the device identifier 301 of the master device, or above the device identifier 301 of the master device, or the like. This is not limited in an embodiment of this application.

In an implementation, the device identifier in the multi-device collaboration home page 300 may be in a different visual style from the device identifier in the multi-device collaboration card 210. For example, the device identifier in the multi-device collaboration card 210 may be composed of a device icon and a background color, while the device identifier in the multi-device collaboration home page 300 may be a blister element wrapping a device icon, or a bubble element wrapping a device icon, etc. In addition, in the multi-device collaboration home page 300, the device identifier 301 of the master device and the device identifier 214 of the slave device may be in different colors to be distinguished of the user. For example, the device identifier 301 of the master device may be a blue blister element, and the device identifier 214 of the slave device may be a white (or transparent) blister element. In addition, in the multi-device collaboration home page 300, the device identifier 301 of the master device and the device identifier 214 of the slave device may be in different sizes to be distinguished of the user. For example, the device identifier 301 of the master device may have a larger size than the device identifier 214 of the slave device.

In an implementation, the multi-device collaboration home page 300 may also include device names 215 of all slave devices. The device name 215 may be displayed in collaboration with a device identifier 214 corresponding thereto. For example, the device name may be displayed above, below, or at other positions of the device identifier 214 corresponding thereto. In an embodiment of this application, the device name 215 may be a product name of a slave device, such as Honor Smart TV, Honor Pad and Honor Magic Book. The device name 215 may also be a user-defined name such as Honor pad of Xiao Li, or Honor smart screen in living room. This is not limited in an embodiment of this application.

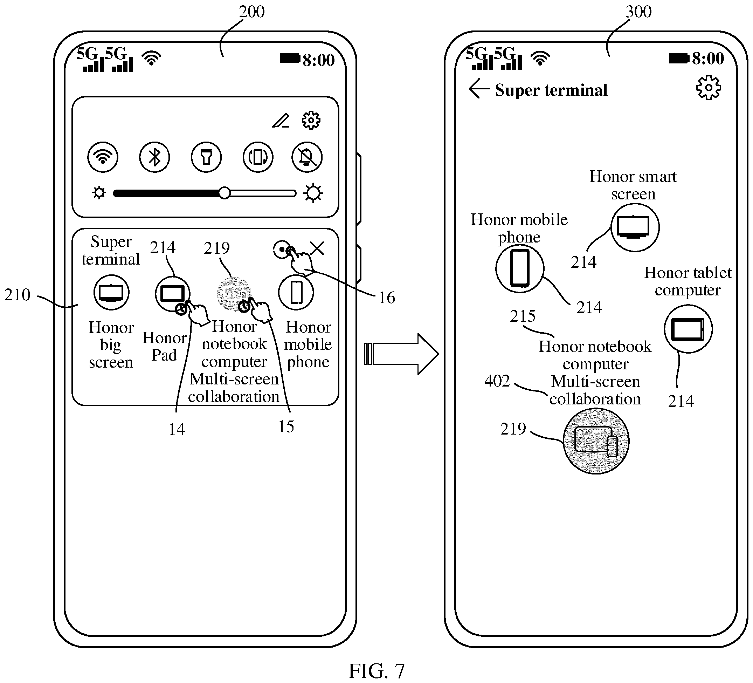

FIG. 7 is a third group of schematic interaction diagrams of a multi-device collaboration method according to an embodiment of this application.

As shown in FIG. 7, in a case that the master device has established a multi-device collaboration with the target device, if the user attempts to open the multi-device collaboration home page 300, a long-press 14 operation can be carried out on the device identifier 214 of any slave device in the multi-device collaboration card 210. The master device may display the multi-device collaboration home page 300 in response to a long-press 14 operation of the user on the device identifier 214 of any slave device.

As shown in FIG. 7, in a case that the master device has established a multi-device collaboration with the target device, if the user attempts to open the multi-device collaboration home page 300, a long-press 15 operation can be carried out on the collaboration identifier 219 of any one of the collaboration types in the multi-device collaboration card 210. The master device may display the multi-device collaboration home page 300 in response to a long-press 15 operation of the user on the collaboration identifier 219 of any one of the collaboration types.

As shown in FIG. 7, in a case that the master device has established a multi-device collaboration with the target device, if the user attempts to open the multi-device collaboration home page 300, a click operation can be carried out on a portal button 213 in the multi-device collaboration card 210. The master device may display the multi-device collaboration home page 300 in response to a click 16 operation of the user on the portal button 213.

As shown in FIG. 7, in a case that the master device has established a multi-device collaboration with the target device, a portal button multi-device collaboration home page 300 may include the collaboration identifier 219 between the master device and the target device, and the device identifier 214 of each slave device. The collaboration identifier 219 may be located in a central area of the multi-device collaboration home page 300, for example, located in a center, a lower area of the center, or an upper area of the center of the multi-device collaboration home page 300. This is not limited in an embodiment of this application. The device identifiers 214 of the slave devices may be distributed on a periphery of the collaboration identifier. The device name 215 of the target device and the type name 402 of the collaboration type may be included above, below, or at other near positions of the collaboration identifier 219.

In an implementation, the collaboration identifier 219 is located in a lower area of a center of the multi-device collaboration home page 300. Device identifiers 214 of all slave devices, such as device identifiers of tablet computers, device identifiers of large-screen devices, device identifiers of PCs, and device identifiers of mobile phones may be distributed surrounding the collaboration identifier in a planetary shape.

In an implementation, the collaboration identifier 219 and the device identifier 214 of the slave device may be in different colors to be distinguished of the user. For example, the collaboration identifier 219 may be a blue blister element, and the device identifier 214 of the slave device may be a white (or transparent) blister element. In addition, in the multi-device collaboration home page 300, the collaboration identifier 219 and the device identifier 214 of the slave device may be in different sizes to be distinguished of the user. For example, the collaboration identifier 219 may have a larger size than the device identifier 214 of the slave device.

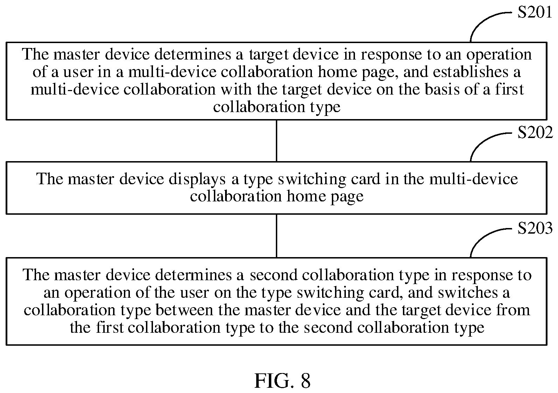

FIG. 8 is a second flow diagram of a multi-device collaboration method according to an embodiment of this application.

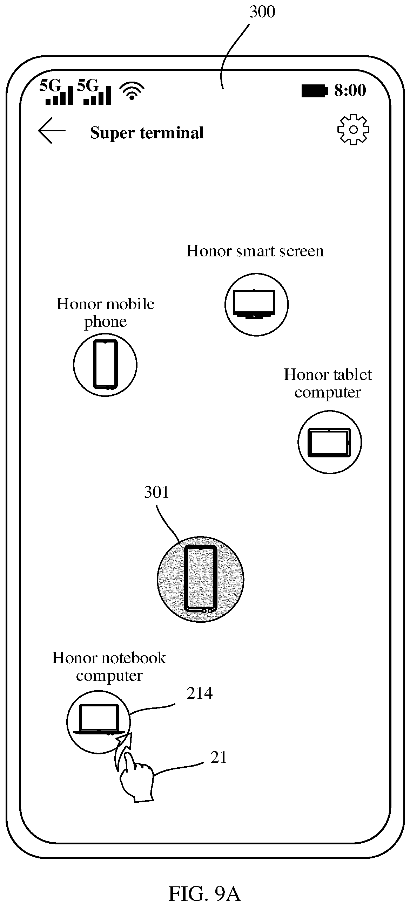

FIG. 9A to FIG. 9D are a fourth group of schematic interaction diagrams of a multi-device collaboration method according to an embodiment of this application.

As shown in FIG. 8, in an implementation, the method may include S201 to S203 as follows:
S201: The master device determines a target device in response to an operation in a multi-device collaboration home page of a user, and establishes a multi-device collaboration with the target device based on a first collaboration type.

During specific implementation, as shown in FIG. 9A, in a case that the master device does not establish a multi-device collaboration with a slave device, if a user attempts to enable a master device to establish a multi-device collaboration with a slave device, the user may drag 21 a device identifier 214 of the slave device to the device identifier 301 of the master device in the multi-device collaboration home page 300. The master device may determine the slave device as the target device in response to a drag 21 operation of the user on the device identifier 214 of the slave device.

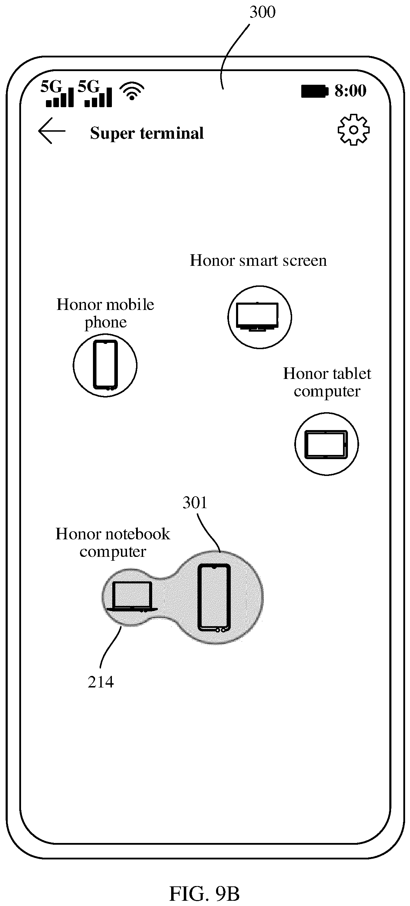

When the user drags the device identifier 214 of the target device to enable the device identifier of the target device to make contact with the device identifier 301 of the master device, the master device initiates a multi-device collaboration to the target device based on the first collaboration type. Moreover, as shown in FIG. 9B, the master device may present an effect that a blister element of the master device is currently being fused with a blister element of the target device in the multi-device collaboration home page 300, so as to visually feed back to a user a state that the multi-device collaboration is currently being established.

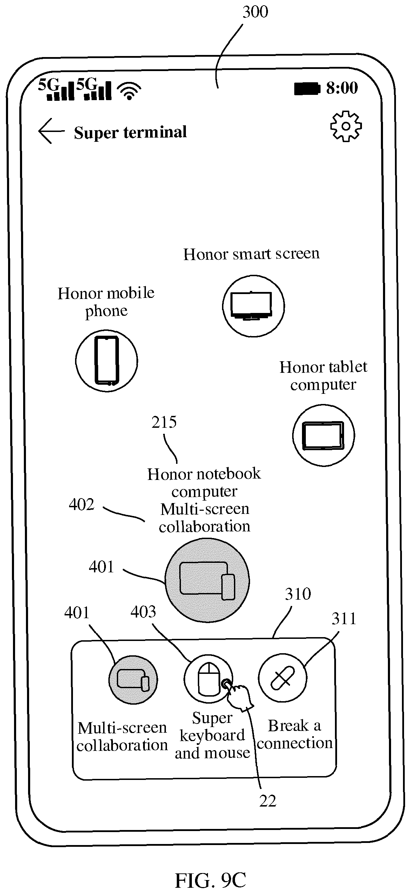

When the master device successfully establishes the multi-device collaboration with the target device, as shown in FIG. 9C, the device identifier 301 of the master device in the multi-device collaboration home page 300 may be switched to a collaboration identifier 401 of the first collaboration type, for example, a blister element of the master device is fused with a blister element of the target device, such that a blister element of the first collaboration type is formed. In addition, the master device may further display a device name 215 of the target device and a type name 402 of the first collaboration type above, below, or at other near positions of the collaboration identifier 401 of the first collaboration type.

In this case, if only one collaboration type is supported between the master device and the target device, the collaboration type is the first collaboration type. If a plurality of collaboration types are supported between the master device and the target device, the first collaboration type may be one of the collaboration types supported between the master device and the target device. For example, if the master device establishes a multi-device collaboration with the target device not for the first time, the first collaboration type may be a default two-device collaboration type. If the master device establishes a multi-device collaboration with the target device not for the first time, the first collaboration type may be the collaboration type that is used when both parties establish a multi-device collaboration last time, or may be a default two-device collaboration type.

S202: The master device displays a type switching card in a multi-device collaboration home page.

The type switching card 310 may be displayed above, below, or at other adjacent positions of the collaboration identifier 401 of the first collaboration type. This is not limited in an embodiment of this application.

It is required to be supplemented herein that in an embodiment of this application, if the master device establishes the multi-device collaboration with the target device based on the first collaboration type, the master device can directly display the type switching card in the multi-device collaboration home page, and the user is not required to execute any operation. For example, the master device may display the type switching card when successfully establishing multi-device collaboration with the target device. Alternatively, the master device may immediately display the type switching card after successfully establishing the multi-device collaboration with the target device.

As shown in FIG. 9C, the type switching card 310 may include a collaboration identifier of one or more collaboration types supported by the master device and the target device. The master device may display in the type switching card 310 the collaboration identifier of each collaboration type that is supported by the master device and the target device, or may display in the type switching card 310 the collaboration identifiers of some collaboration types that are supported by the master device and the target device, for example, display only collaboration identifiers 403 of collaboration types other than the collaboration identifier 401 of the first collaboration type, which is not limited in an embodiment of this application.

As shown in FIG. 9C, with an example in which the master device is a mobile phone and the target device is a PC, a collaboration type supported by the mobile phone and the PC may include a multi-screen collaboration and a super keyboard and mouse. After the mobile phone establishes a multi-screen collaboration with the PC, the type switching card 310 may include a multi-screen collaboration identifier and a super keyboard and mouse identifier.

In an implementation, if the type switching card 310 includes a collaboration identifier 401 of the first collaboration type and collaboration identifiers 403 of the other collaboration types, the collaboration identifier 401 of the first collaboration type and the collaboration identifiers 403 of the other collaboration types may be displayed in different colors to be distinguished of the user.

In an implementation, the type switching card 310 may further include a connection breaking button 311. If the user attempts to break the multi-device collaboration between the master device and the target device, the user can click 23 the connection breaking button 311. The master device may break the multi-device collaboration with the target device in response to a click 23 operation of the user on the connection breaking button 311, restore the collaboration identifier of the first collaboration type to the device identifier 301 of the master device, and restore the device identifier 214 of the target device to be displayed at an original position thereof. For example, the master device may split a blister element of the first collaboration type into a blister element of the master device and a blister element of the target device, and then move the blister element of the target device to an original position thereof, such that the multi-device collaboration home page 300 is restored to be in a state in FIG. 9A.

It is required to be supplemented herein that in a case that only one collaboration type is supported between the master device and the target device, the type switching card 310 may include a type identifier of the supported collaboration type and a connection breaking button 311, or may include only the connection breaking button 311. This is not limited in an embodiment of this application.

S203: The master device determines a second collaboration type in response to an operation of a user on the type switching card, and switches a collaboration type between the master device and the target device from the first collaboration type to the second collaboration type.

The second collaboration type may be one of a plurality of collaboration types included in the type switching card 310.

During specific implementation, as shown in FIG. 9C, if a user attempts to switch the collaboration type between a master device and a target device from a first collaboration type to another collaboration type, the user may click 22 on the collaboration identifier 403 of any one of the collaboration types in the type switching card 310. The master device may, in response to a click 22 operation of the user on a collaboration identifier 403 of any one of the collaboration types, determine the collaboration type as a second collaboration type, and switch the collaboration type between the master device and the target device from the first collaboration type to the second collaboration type.

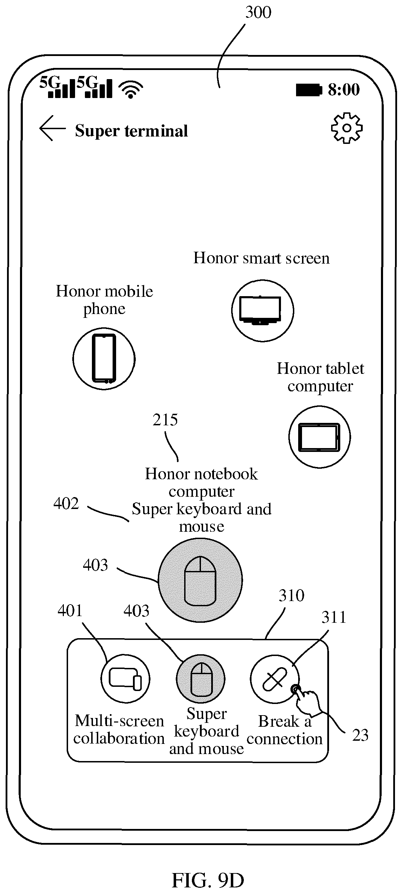

During specific implementation, the master device may initiate a switch request to the target device directly based on the second collaboration type in a state of not breaking the multi-device collaboration with the target device, so as to switch the master device and the target device to the second collaboration type. Moreover, as shown in FIG. 9D, after the master device establishes the multi-device collaboration with the target device based on the second collaboration type, the collaboration identifier 401 of the first collaboration type in the multi-device collaboration home page 300 may be switched to the collaboration identifier 403 of the second collaboration type. In addition, the master device may also break the multi-device collaboration with the target device and then initiate a multi-device collaboration again to the target device based on the second collaboration type, such that the master device reestablishes a multi-device collaboration with the target device based on the second collaboration type.

In an implementation, after displaying the type switching card 310, the master device may close the type switching card 310 if it is detected that the user does not carry out any operation on the type switching card 310 for a preset period of time thereafter. The preset period of time may be 3s, 5s, or the like. This is not limited in an embodiment of this application.

After the master device closes the type switching card 310, if the user attempts to enable the master device to redisplay the type switching card 310, the user may click on the collaboration identifier 401 of the first collaboration type (or the second collaboration type) in the multi-device collaboration home page 300. The master device may redisplay the type switching card 310 in response to the click operation of the user.

According to the method provided in an embodiment of this application, in a case that a master device and a target device support a plurality of collaboration types, the master device may establish a multi-device collaboration with the target device based on a preset collaboration type first. Then, a user may select a desired collaboration type at a control center of the master device. The master device may switch from the preset collaboration type to the desired collaboration type of the user based on selection of the user. Thus, user experience is improved.

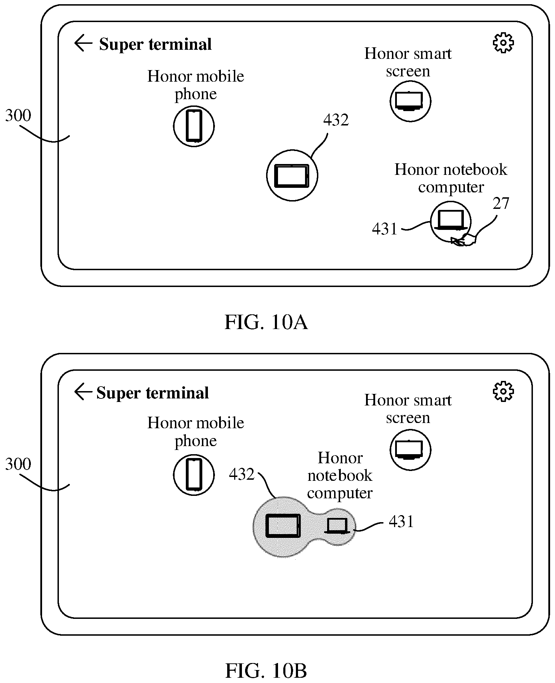

FIG. 10A to FIG. 10D are a fifth group of schematic interaction diagrams of a multi-device collaboration method according to an embodiment of this application. Interaction scenes corresponding to S201 to S203 of the multi-device collaboration method provided in an embodiment of this application will be exemplarily described below in combination with FIG. 10A to FIG. 10D with an example in which the master device is a tablet computer and the slave device is a PC.

As shown in FIG. 10A, if a user attempts to enable a tablet computer to establish a multi-device collaboration with a PC, a blister element 431 of the PC may be dragged 27 to a blister element 432 of the tablet computer in a multi-device collaboration home page 300. When the user drags the blister element 431 of the PC to enable the device identifier of the target device to make contact with the blister element 432 of the tablet computer, the tablet computer initiates a default-type multi-device collaboration to the PC, such as screen mirroring. Moreover, as shown in FIG. 10B, the tablet computer may present an effect that a blister element 432 of the tablet computer is currently being fused with a blister element 431 of the PC in the multi-device collaboration home page 300, so as to visually feed back to a user a state that the multi-device collaboration is currently being established.

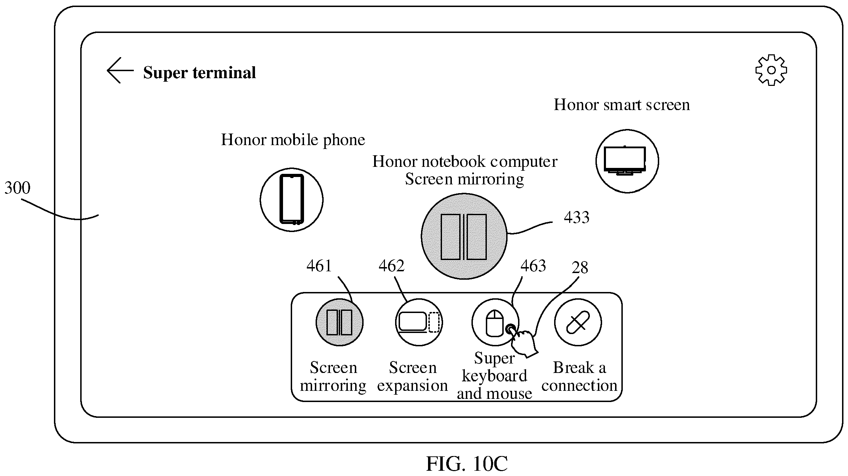

As shown in FIG. 10C, when the tablet computer successfully establishes screen mirroring with the PC, the blister element 432 of the tablet computer may be fused with the blister element 431 of the PC, so as to form a blister element 433 of the screen mirroring. The type switching card 310 is displayed below the blister element 433 of the screen mirroring.

In this case, the type switching card 310 may include collaboration identifiers of one or more collaboration types supported by the tablet computer and the PC, such as a screen mirroring identifier 461, a screen expansion identifier 462 and a super keyboard and mouse identifier 463.

If the user attempts to switch the collaboration type between the tablet computer and the PC, for example, switch the collaboration type between the tablet computer and the PC from screen mirroring to a super keyboard and mouse, the user can click 28 on a super keyboard and mouse identifier 463 in the type switching card 310. The tablet computer may switch the collaboration type between the tablet computer and the PC from the screen mirroring to a super keyboard and mouse in response to the user operation.

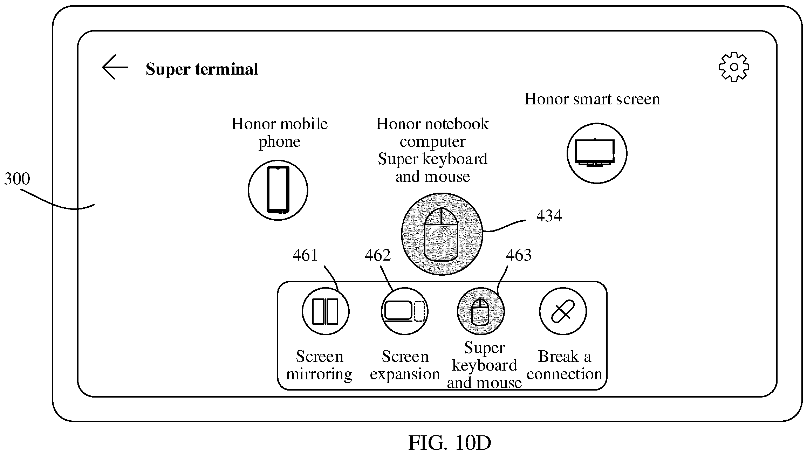

As shown in FIG. 10D, after the tablet computer establishes a super keyboard and mouse with the PC, the blister element 433 of the screen mirroring in the multi-device collaboration home page 300 may be switched to the blister element 434 of the super keyboard and mouse.

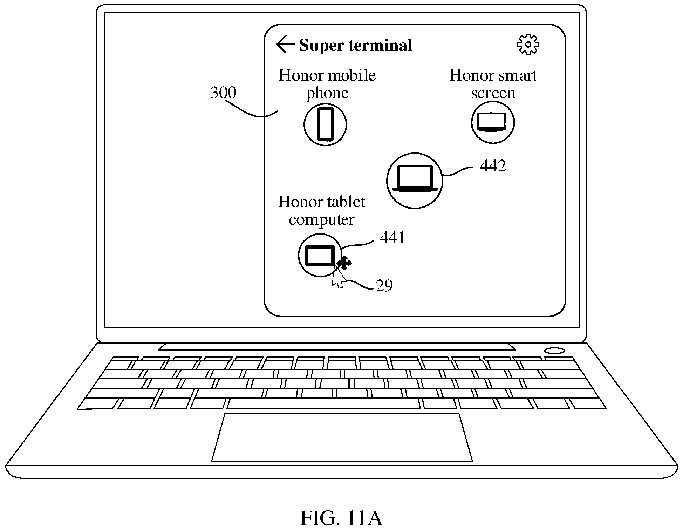

FIG. 11A to FIG. 11D are a sixth group of schematic interaction diagrams of a multi-device collaboration method according to an embodiment of this application.

Interaction scenes corresponding to S201 to S203 of the multi-device collaboration method provided in an embodiment of this application will be exemplarily described below in combination with FIG. 11A to FIG. 11D with an example in which the master device is a PC and the slave device is a tablet computer.

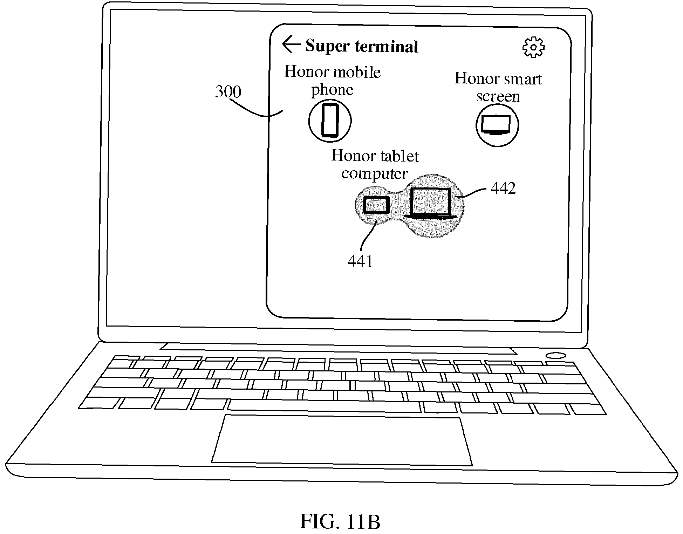

As shown in FIG. 11A, if a user attempts to enable the PC to establish a multi-device collaboration with the tablet computer, a blister element 441 of the tablet computer may be dragged 29 to a blister element 442 of the PC in a multi-device collaboration home page 300 through a dragging operation of a mouse. When the user drags the blister element 441 of the tablet computer to enable the device identifier of the target device to make contact with the blister element 442 of the PC, the PC initiates a default-type a multi-device collaboration to the tablet computer, such as screen mirroring. Moreover, as shown in FIG. 11B, the PC may present an effect that a blister element 442 of the PC is currently being fused with a blister element 441 of the tablet computer in the multi-device collaboration home page 300, so as to visually feed back to a user a state that the multi-device collaboration is currently being established.

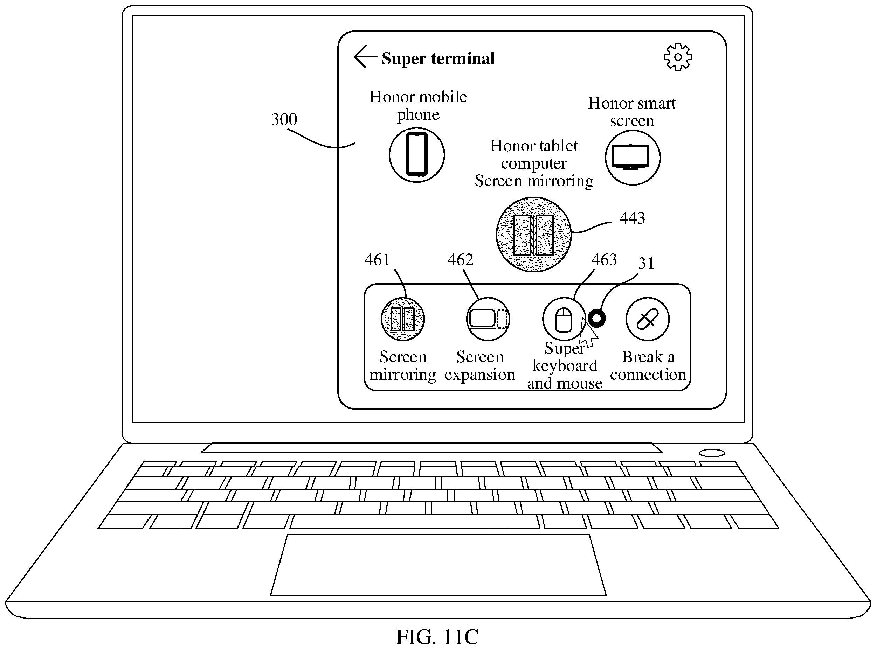

As shown in FIG. 11C, when the PC successfully establishes screen mirroring with the tablet computer, the blister element 442 of the PC may be fused with the blister element 441 of the tablet computer, so as to form a blister element 443 of the screen mirroring. The type switching card 310 is displayed below a multi-screen collaboration identifier 401.

In this case, the type switching card 310 may include collaboration identifiers of one or more collaboration types supported by the PC and the tablet computer, such as a screen mirroring identifier 461, a screen expansion identifier 462 and a super keyboard and mouse identifier 463.

If the user attempts to switch the collaboration type between the PC and the tablet computer, for example, if the user attempts to switch the collaboration type between the PC and the tablet computer from a multi-screen collaboration to a super keyboard and mouse, the user can click 31 on a super keyboard and mouse identifier 463 in the type switching card 310. The master device may switch the collaboration type between the PC and the tablet computer from screen mirroring to a super keyboard and mouse in response to a user operation.

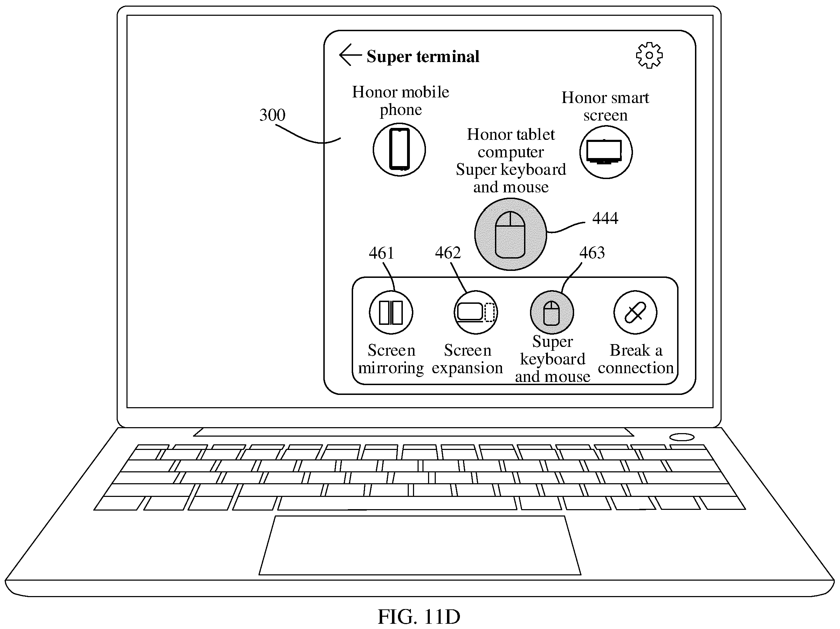

As shown in FIG. 11D, after the PC establishes a super keyboard and mouse with the tablet computer, the blister element 443 of the screen mirroring in the multi-device collaboration home page 300 may be switched to the blister element 444 of the super keyboard and mouse.

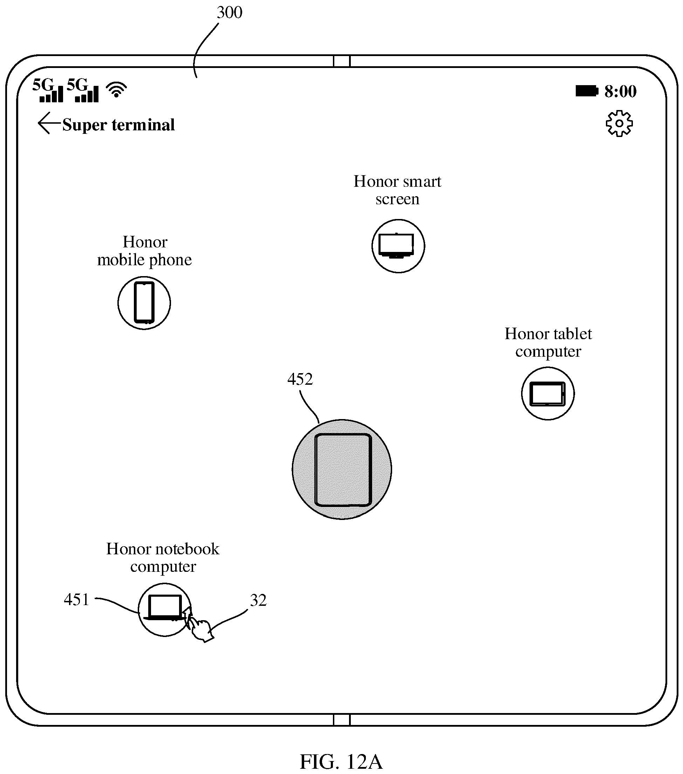

FIG. 12A to FIG. 12D are a seventh group of schematic interaction diagrams of a multi-device collaboration method according to an embodiment of this application.

Interaction scenes corresponding to S201 to S203 of the multi-device collaboration method provided in an embodiment of this application will be exemplarily described below with an example in which the master device is a foldable-screen mobile phone and the slave device is a PC. It should be noted herein that the foldable-screen mobile phone can generally work in two forms, one is that a mobile phone body is folded, and the other one is that the mobile phone body is unfolded. The foldable-screen mobile phone is equivalent to a conventional mobile phone when the mobile phone body is folded, and a collaboration type supported between the mobile phone and the PC is the same as that supported by the conventional mobile phone. For example, the collaboration type may include: a multi-screen collaboration and a super keyboard and mouse. The foldable-screen mobile phone is a new product with respect to the conventional mobile phone when the mobile phone body is unfolded, and a collaboration type supported between the mobile phone and the PC is different from that supported by the conventional mobile phone. For example, the collaboration type may include: a multi-screen collaboration, screen mirroring, screen expansion, and a super keyboard and mouse.

An interaction scene when the mobile phone body of the foldable-screen mobile phone is unfolded will be exemplarily described below in combination with FIG. 12A to FIG. 12D.

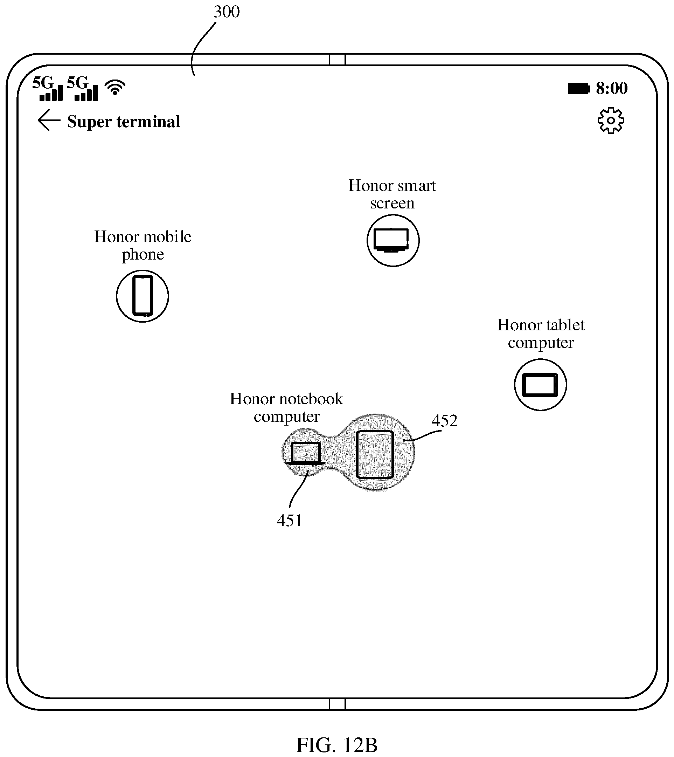

As shown in FIG. 12A, if a user attempts to enable a foldable-screen mobile phone to establish a multi-device collaboration with a PC, a blister element 451 of the PC may be dragged 32 to a blister element 452 of the foldable-screen mobile phone in a multi-device collaboration home page 300. When the user drags the blister element 451 of the PC to enable the device identifier of the target device to make contact with the blister element 452 of the foldable-screen mobile phone, the foldable-screen mobile phone initiates a default-type a multi-device collaboration to the PC, such as a multi-screen collaboration. Moreover, as shown in FIG. 12B, the foldable-screen mobile phone may present an effect that a blister element 452 of the foldable-screen mobile phone is currently being fused with a blister element 451 of the PC in the multi-device collaboration home page 300, so as to visually feed back to a user a state that the multi-device collaboration is currently being established.

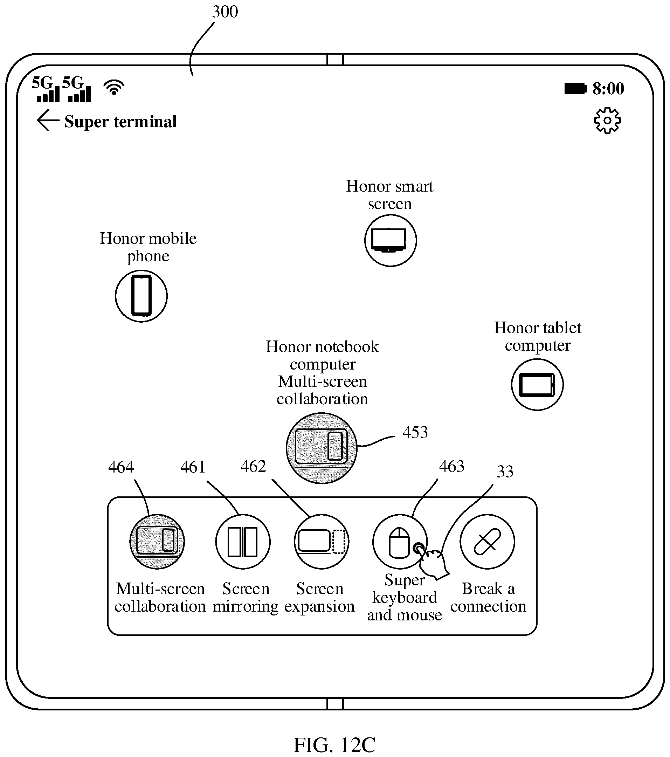

As shown in FIG. 12C, when the foldable-screen mobile phone successfully establishes a multi-screen collaboration with the PC, the blister element 452 of the foldable-screen mobile phone may be fused with the blister element 451 of the PC, so as to form a blister element 453 of the multi-screen collaboration. The type switching card 310 is displayed below a multi-screen collaboration identifier 401.

In this case, the type switching card 310 may include collaboration identifiers of one or more collaboration types supported by the foldable-screen mobile phone and the PC, such as a screen mirroring identifier 461, a screen expansion identifier 462, a super keyboard and mouse identifier 463 and a multi-screen collaboration identifier 464.

If the user attempts to switch a collaboration type between the foldable-screen mobile phone and the PC, for example, switch the collaboration type between the foldable-screen mobile phone and the PC from a multi-screen collaboration to a super keyboard and mouse, the user can click 33 on a super keyboard and mouse identifier 463 in the type switching card 310. The master device may switch the collaboration type between the foldable-screen mobile phone and the PC from a multi-screen collaboration to a super keyboard and mouse in response to a user operation.

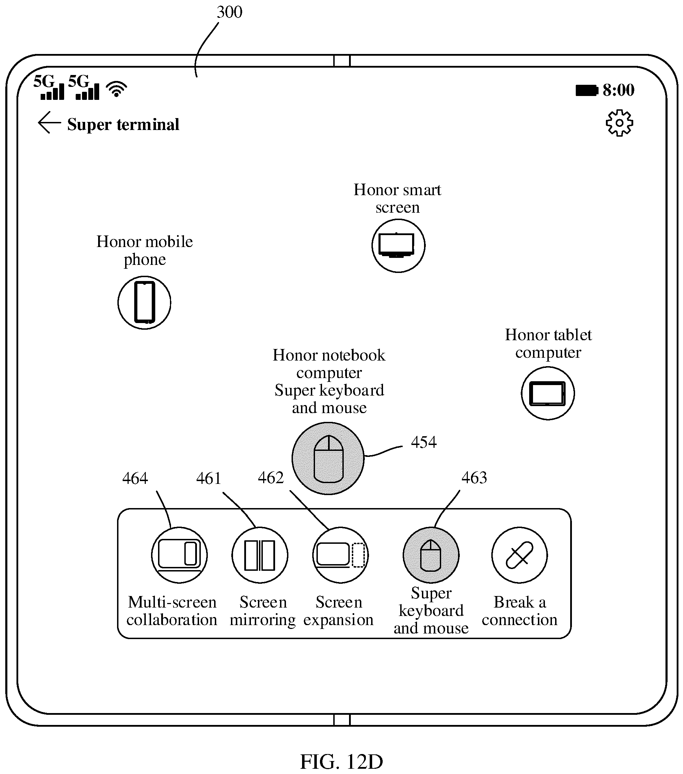

As shown in FIG. 12D, after the foldable-screen mobile phone establishes a super keyboard and mouse with the PC, a blister element 453 of a multi-screen collaboration in the multi-device collaboration home page 300 may be switched to a blister element 454 of a super keyboard and mouse.

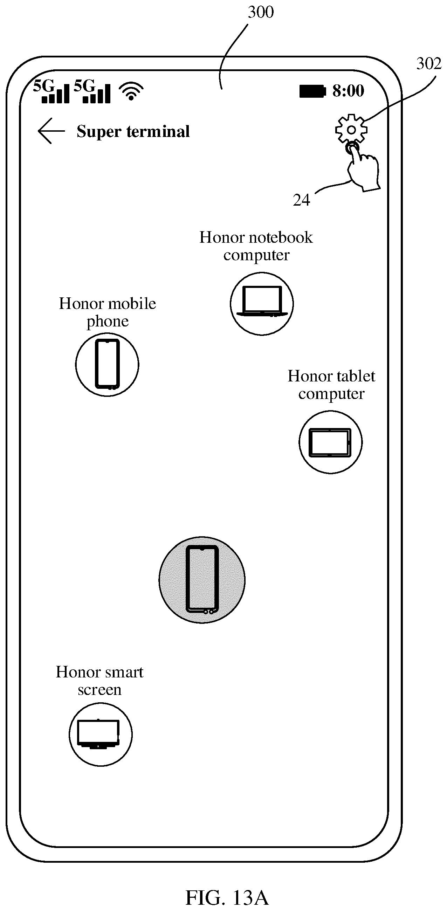

FIG. 13A to FIG. 13C are schematic diagrams of methods for enabling or disabling an automatic collaboration service shown according to embodiments of this application.

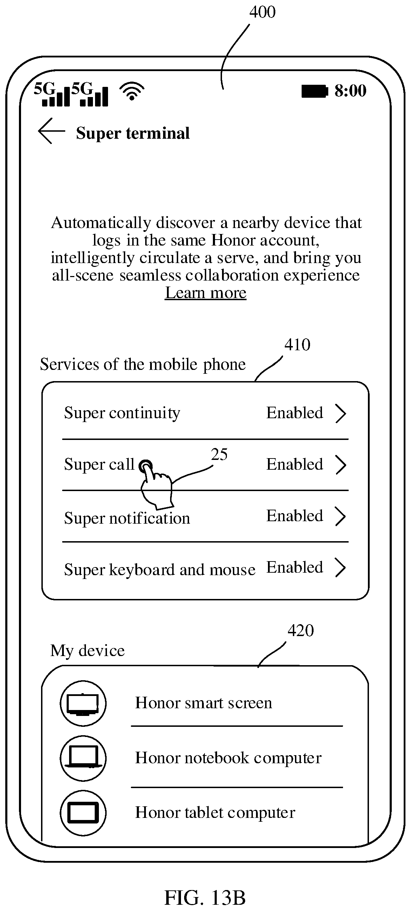

As shown in FIG. 13A and FIG. 13B, in an implementation, the multi-device collaboration home page 300 may further include a setup button 302. The setup button 302 may be arranged at any position on the multi-device collaboration home page 300, such as an upper right corner of the multi-device collaboration home page 300.

With an example in which the master device is a mobile phone, if the user attempts to set up a multi-device collaboration, the user may click 24 on the setup button 302. The mobile phone may enter a setup page 400 for a multi-device collaboration in response to the click 24 operation of the user. The setup page 400 may include, for example, a collaboration service list 410 and a slave device list 420.

The collaboration service list 410 may include options of one or more settable collaboration services, such as a super continuity, a super call, a super notification and a super keyboard and mouse; and each collaboration service state, such as an enabled state or a disabled state. The slave device list may include a name and a type of a nearby slave device that a mobile phone finds, and a device name and a type of a device that established a multi-device collaboration once with the mobile phone.

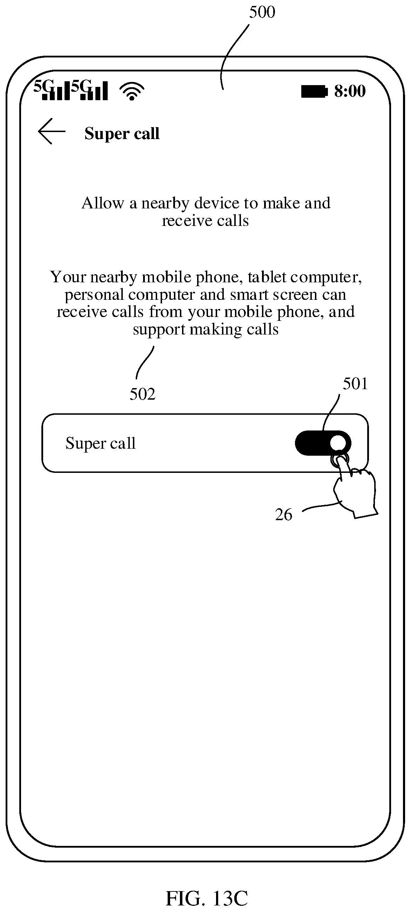

As shown in FIG. 13B and FIG. 13C, if the user attempts to set a service state of a collaboration service, the user can click 25 on an option of the collaboration service in the collaboration service list 410. The mobile phone may enter a sub-page 500 of the collaboration service in response to the click 25 operation of the user. The sub-page 500 may include, for example, an on/off button 501 of the collaboration service. Then, the user can enable or disable the collaboration service by clicking 26 on the on/off button 501.

Exemplarily, when the user clicks 25 on "super call" in the collaboration services list 410, the mobile phone may enter a sub-page 500 of super call. The sub-page 500 of the super call may include function description information 502 of the super call, and the on/off button 501 of the supper call. When the on/off button 501 is in an enabled state, if the user clicks 26 on the on/off button 501, a super call service may be disabled. When the on/off button 501 is in a disabled state, if the user clicks 26 on the on/off button 501, the super call service may be enabled.

According to the method provided in an embodiment of this application, a user can directly enter a setup page of a multi-device collaboration from a multi-device collaboration home page, so as to control an automatic collaboration service to be enabled or disabled, such that user experience is improved.

In a multi-device collaboration scene, the master device may have the following three states at some time:
State A: the master device does not establish a multi-device collaboration with other devices (simplified as a state that the master device is not in a collaboration).
State B: the master device is currently in a multi-device collaboration with the slave device.
State C: the master device is currently in a multi-device collaboration with an out-of-loop device.

State B and state C may be simplified as a state that the master device is not in a collaboration.

In a multi-device collaboration scene, the slave device may have the following three states at some time:
State a: the slave device does not establish a multi-device collaboration with other devices (simplified as a state that the slave device is not in a collaboration).
State b: the slave device is currently in a multi-device collaboration with another slave device.
State c: the slave device is currently in a multi-device collaboration with an out-of-loop device.

State b and state c may be simplified as a state that the slave device is not in a collaboration.

Based on the above various states, when a multi-device collaboration between a master device and a target device is established, the following 4 types of scenes and 8 sub-scenes may occur:
Scene 1: the master device and the target device are not in a collaboration.
Scene 2: the master device is in a collaboration, but the target device is not in a collaboration. Scene 2 may include two sub-scenes as follows:
   Sub-scene 1: the master device is currently in a multi-device collaboration with another slave device.
   Sub-scene 2: the master device is currently in a multi-device collaboration with an out-of-loop device.
Scene 3: the master device is not in a collaboration, but the target device is in a collaboration. Scene 3 may include two sub-scenes as follows:
   Sub-scene 3: the target device is currently in a multi-device collaboration with another slave device.
   Sub-scene 4: the target device is currently in a multi-device collaboration with an out-of-loop device.
Scene 4: the master device is in a collaboration, but the slave device is not in a collaboration. Scene 4 may include four sub-scenes as follows:
   Sub-scene 5: the master device is currently in a multi-device collaboration with another slave device, and the target device is currently in a multi-device collaboration with another slave device.
   Sub-scene 6: the master device is currently in a multi-device collaboration with another slave device, and the target device is currently in a multi-device collaboration with an out-of-loop device.
   Sub-scene 7: the master device is currently in a multi-device collaboration with an out-of-loop device, and the target device is currently in a multi-device collaboration with another slave device.
   Sub-scene 8: the master device is currently in a multi-device collaboration with an out-of-loop device, and the target device is currently in a multi-device collaboration with an out-of-loop device.

In cases of different scenes and sub-scenes, when the user drags the device identifier of the target device to enable the device identifier of the target device to make contact with the device identifier of the master device, the master device and the target device may have different response methods. Specific descriptions will be provided below in combination with some examples.

In a case of scene 1, the multi-device collaboration method may include steps as follows: The master device establishes a multi-device collaboration with the target device based on the first collaboration type in response to a drag operation of the user on the device identifier of the target device to make the device identifier of the target device in contact with the device identifier of the master device, and displays a type switching card 310 in the multi-device collaboration home page 300.

Specifically, refer to S201 and S202 mentioned above for the steps.

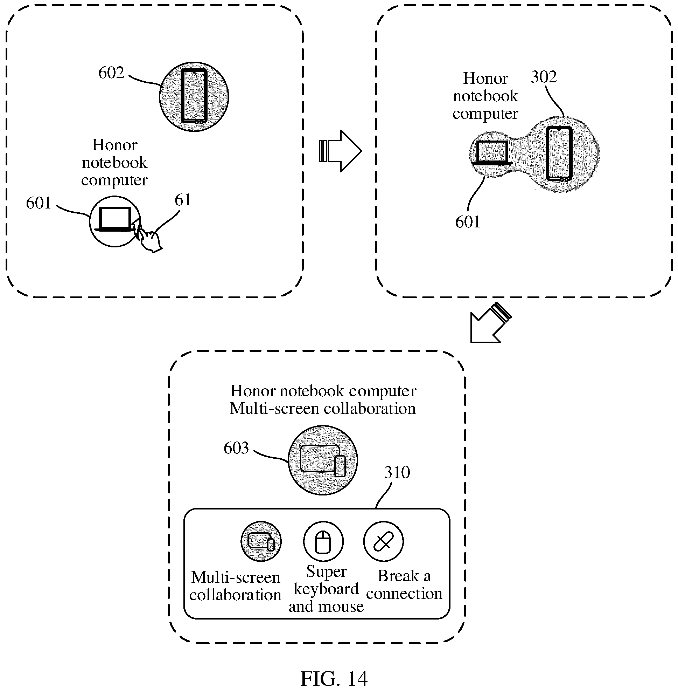

FIG. 14 is a schematic interaction diagram of scene 1 of a multi-device collaboration method according to an embodiment of this application.

As shown in FIG. 14, with an example in which the master device is a mobile phone, the target device is a PC (such as an Honor notebook computer), and the first collaboration type is a multi-screen collaboration,
if a user attempts to enable the mobile phone to establish a multi-device collaboration with the PC, a blister element 601 of the PC may be dragged 61 to a blister element 602 of the mobile phone in a multi-device collaboration home page. After dragging 61 the blister element 601 of the PC to enable the device identifier of the target device to make contact with the blister element 602 of the mobile phone, the user lifts a finger, and the mobile phone initiates a multi-screen collaboration to the PC. Moreover, the mobile phone may present an effect that the blister element 602 of the mobile phone is currently being fused with the blister element 601 of the PC in the multi-device collaboration home page, so as to visually feed back to the user a state that the multi-device collaboration is currently being established. When the mobile phone successfully establishes a multi-screen collaboration with the PC, the blister element 602 of the mobile phone may be fused with the blister element 601 of the PC, so as to form a blister element 603 of the multi-screen collaboration. The mobile phone may also display device name "Honor smart screen" and collaboration type "multi-screen collaboration" of the PC above (or at other near positions of) the blister element 603 of the multi-screen collaboration. The mobile phone may further display the type switching card 310 below (or at other near positions of) the blister element 603 of a multi-screen collaboration. Reference can be made to contents recited above for FIG. 9C for a specific implementation of the type switching card 310, which will not be described in detail herein.

Sub-scene 1 of scene 2 may include two cases. The first case is that a multi-device collaboration currently carried out by the master device with another slave device does not support simultaneous access of three devices. For example, the multi-device collaboration currently carried out by the master device with another slave device is a collaboration type other than a super keyboard and mouse. The second case is that a multi-device collaboration currently carried out by the master device with another slave device supports simultaneous access of three devices, such as a super keyboard and mouse. For ease of description hereinafter, a collaboration type that does not support simultaneous access of three devices is referred to as a third collaboration type, and a multi-device collaboration established based on the third collaboration type is referred to as a first multi-device collaboration. A collaboration type that supports simultaneous access of three devices is referred to as a fourth collaboration type, and a multi-device collaboration established based on the fourth collaboration type is referred to as a second multi-device collaboration.

In the first case, the multi-device collaboration method may include steps as follows: display, in a state of establishing the first multi-device collaboration with the first slave device, a switching inquiry card by the master device in response to a drag operation of the user on the device identifier of the target device to make the device identifier of the target device in contact with the collaboration identifier of the third collaboration type. The switching card is used to query the user whether to switch the collaboration device.

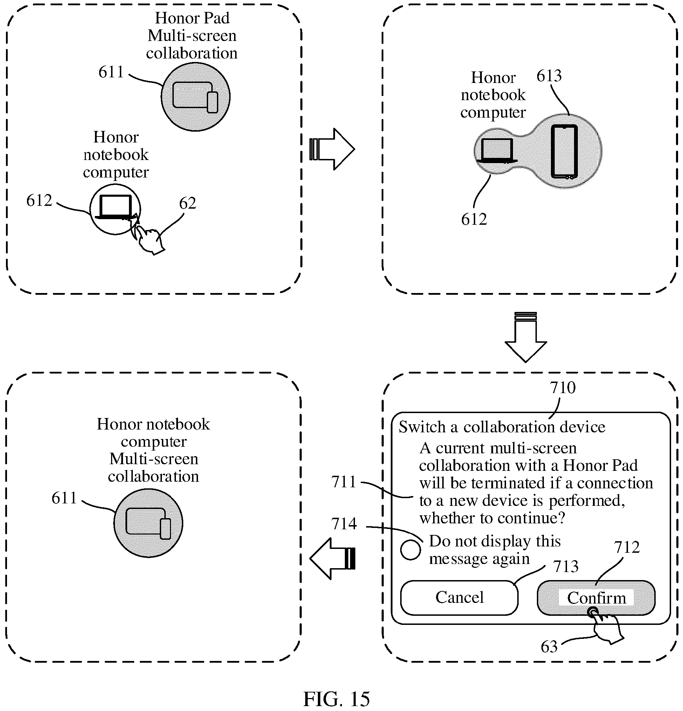

FIG. 15 is a first schematic interaction diagram of sub-scene 1 of a multi-device collaboration method according to an embodiment of this application.

As shown in FIG. 15, with an example in which the master device is a mobile phone, the first slave device is a tablet computer (such as an Honor PAD), the target device is a PC (such as an Honor notebook computer), and the third collaboration type is a multi-screen collaboration. When the mobile phone establishes a multi-screen collaboration with the tablet computer, the multi-device collaboration home page may display a blister element 611 of a multi-screen collaboration. If a user attempts to enable the mobile phone to establish a multi-device collaboration with the PC, a blister element 612 of the PC may be dragged 62 to a blister element 611 of a multi-screen collaboration in a multi-device collaboration home page. After dragging 62 the blister element 612 of the PC to enable the device identifier of the target device to make contact with the blister element 611 of a multi-screen collaboration, the user lifts a finger, the mobile phone displays an effect that the blister element 612 of the Honor tablet computer is fused with the blister element 613 of the mobile phone in the multi-device collaboration home page, and displays the switching inquiry card 710.

As shown in FIG. 15, the switching inquiry card 710 may include inquiry information 711 configured to query the user whether to switch a collaboration device, such as inquiry information that "a current multi-screen collaboration with an Honor pad will be terminated if a connection to a new device is performed, whether to continue? " In addition, the switching inquiry card further includes a "confirm" button 712 and a "cancel" button 713. If the user clicks 63 the "confirm" button 712, the mobile phone will end a multi-screen collaboration with the tablet computer and establishes a multi-device collaboration with the PC based on a default or last-used collaboration type, for example, in a case that the mobile phone last establishes a multi-screen collaboration with the PC, if the user clicks 63 the "confirm" button 712, the mobile phone will establish a multi-screen collaboration with the PC. If the user clicks the "cancel" button 713, the mobile phone continues keeping a multi-screen collaboration state with the tablet computer.

In an implementation, the switching inquiry card may further include a no-disturbing option 714. The no-disturbing option 714 may include prompt information configured to guide the user to select or deselect the option, such as "Do not display this message again". If the user selects the no-disturbing option, the master device will not display the switching inquiry card again in the same scene thereafter, but directly responds to a user operation. For example, if the user drags the blister element 612 of the PC to the blister element 611 of a multi-screen collaboration to enable the blister element of the PC to make contact with the blister element 611 of a multi-screen collaboration, the mobile phone can directly end a multi-screen collaboration with the tablet computer and establish a multi-device collaboration with the PC.

In the second case, the multi-device collaboration method may include steps as follows: The master device adds the target device to the second multi-device collaboration in response to a drag operation of the user on the device identifier of the target device to make the device identifier of the target device in contact with the collaboration identifier of the fourth collaboration type, in a state of establishing a second multi-device collaboration with the first slave device.

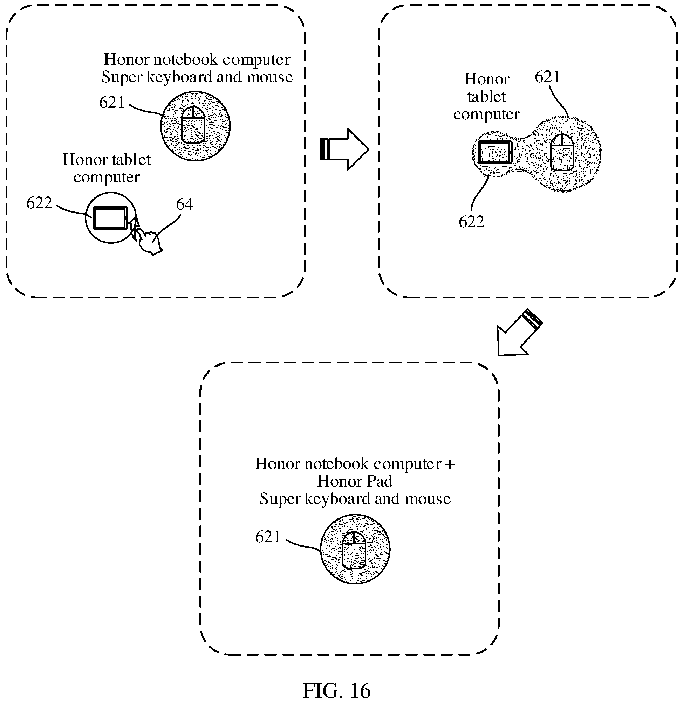

FIG. 16 is a second schematic interaction diagram of sub-scene 1 of a multi-device collaboration method according to an embodiment of this application.

As shown in FIG. 16, with an example in which the master device is a mobile phone, the first slave device is a PC (such as an Honor notebook computer), the target device is a tablet computer (such as an Honor PAD), and a fourth collaboration type is a super keyboard and mouse. When the mobile phone establishes a super keyboard and mouse with the PC, the multi-device collaboration home page may display the blister element 621 of the super keyboard and mouse. If the user attempts to add the tablet computer to the super keyboard and mouse as well, the blister element 622 of the tablet computer can be dragged 64 to the blister element 621 of the super keyboard and mouse in the multi-device collaboration home page. After dragging 64 the blister element 622 of the tablet computer to enable the device identifier of the target device to make contact with the blister element 621 of the super keyboard and mouse, the user lifts a finger, and the mobile phone initiates the super keyboard and mouse to the tablet computer. Moreover, the mobile phone may present an effect that the blister element 621 of the super keyboard and mouse is currently being fused with the blister element 622 of the tablet computer in the multi-device collaboration home page, so as to visually feed back to the user a state that the multi-device collaboration is currently being established. When the tablet computer is successfully added to the super keyboard and mouse, the blister element 622 of the tablet computer is fully fused into the blister element 621 of the super keyboard and mouse. The mobile phone may further add device name "Honor PAD" of the tablet computer above (or at other near positions of) the blister element 621 of the super keyboard and mouse.

In a case of sub-scene 2 of scene 2, the multi-device collaboration method may include steps as follows: display, in a state of establishing a multi-device collaboration with an out-of-loop device, a switching inquiry card by the master device in response to a drag operation of the user on the device identifier of the target device to make the device identifier of the target device in contact with the collaboration identifier of the multi-device collaboration. The switching card is used to query the user whether to switch the collaboration device.

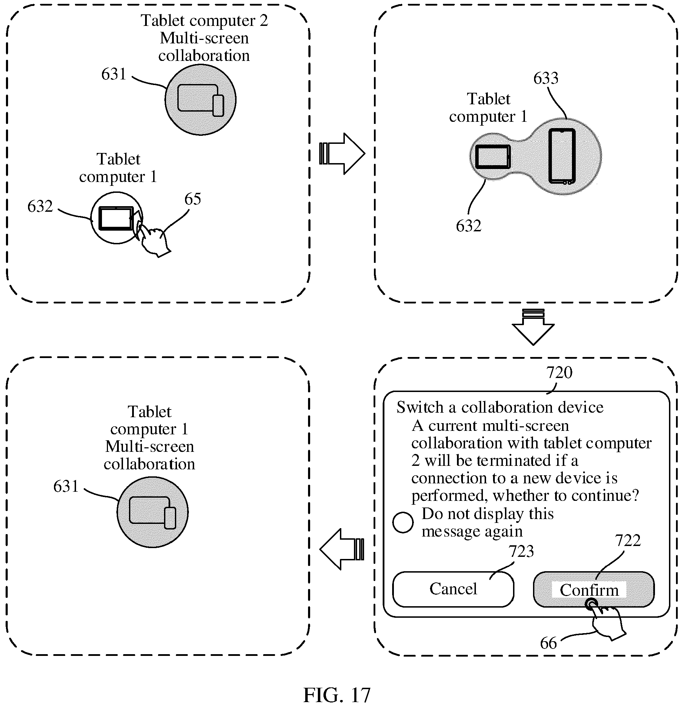

FIG. 17 a schematic interaction diagram of sub-scene 2 of a multi-device collaboration method according to an embodiment of this application.

As shown in FIG. 17, with an example in which the master device is a mobile phone, the target device is tablet computer 1, and the out-of-loop device is tablet computer 2, when the mobile phone establishes a multi-screen collaboration with tablet computer 2, the multi-device collaboration home page may display a blister element 631 of a multi-screen collaboration. If a user attempts to enable the mobile phone to establish a multi-device collaboration with tablet computer 1, a blister element 632 of tablet computer 1 may be dragged 65 to the blister element 631 of the multi-screen collaboration in a multi-device collaboration home page. After dragging 65 the blister element of tablet computer 1 to enable the device identifier of the target device to make contact with the blister element 631 of the multi-screen collaboration, the user lifts a finger, the mobile phone displays an effect that the blister element 632 of tablet computer 1 is fused with the blister element 633 of the mobile phone in the multi-device collaboration home page, and displays the switching inquiry card 720.

The switching inquiry card 720 is similar to the switching inquiry card 710 shown in FIG. 15 and will not be repeated herein. If the user clicks 66 the "confirm" button 722, the mobile phone will end a multi-screen collaboration with tablet computer 2 and establish a multi-device collaboration with tablet computer 1 based on a default or last-used collaboration type. For example, in a case that the mobile phone last establishes a multi-screen collaboration with tablet computer 1, if the user clicks 66 the "confirm" button 722, the mobile phone will establish a multi-screen collaboration with tablet computer 1. If the user clicks the "cancel" button 723, the mobile phone continues keeping a multi-screen collaboration state with tablet computer 2.

In a case of scene 3, the multi-device collaboration method may include steps as follows: establish a multi-device collaboration with another slave device by the master device; or display, in a state that a target slave device establishes a multi-device collaboration with an out-of-loop device, a switching inquiry card by the master device in response to a drag operation of the user on the device identifier of the target device to make the device identifier of the target device in contact with the collaboration identifier of the multi-device collaboration. The switching card is used to query the user whether to switch the collaboration device.

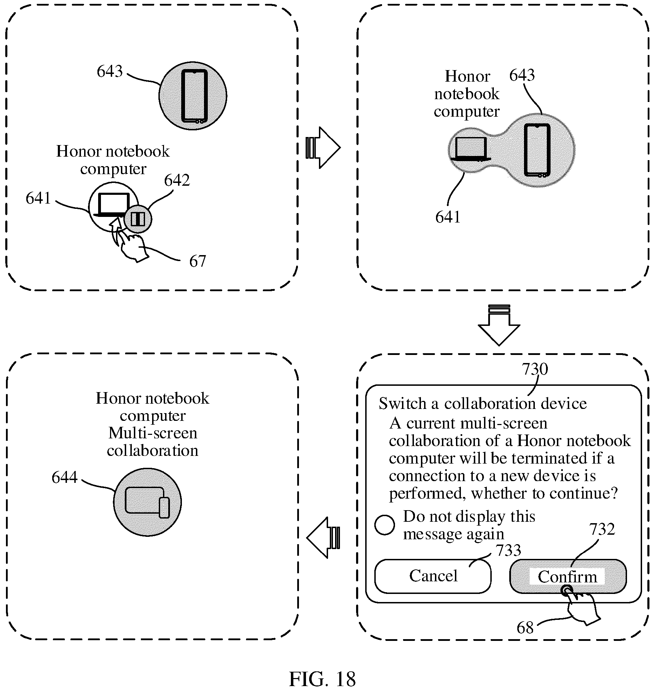

FIG. 18 is a first schematic interaction diagram of scene 3 of a multi-device collaboration method according to an embodiment of this application.

As shown in FIG. 18, with an example in which the master device is a mobile phone, the target device is a PC (such as an Honor notebook computer), when the PC establishes a multi-device collaboration with another slave device or an out-of-loop device, the mobile phone may add a state identifier 642 to the blister element 641 of the PC in the multi-device collaboration home page. The state identifier 642 may be, for example, a graphical corner mark located at a bottom right corner (or other positions) of the blister element 641 of the PC. In this way, by using the state identifier, the user can learn that the PC is currently establishing a multi-device collaboration with devices other than the mobile phone.

If a user attempts to enable the mobile phone to establish a multi-device collaboration with the PC, a blister element 641 of the PC may be dragged 67 to a blister element 643 of the mobile phone in a multi-device collaboration home page. After dragging 67 the blister element 641 of the PC to enable the device identifier of the target device to make contact with the blister element 643 of the mobile phone, the user lifts a finger, the mobile phone displays an effect that the blister element 641 of the PC is fused with the blister element 643 of the mobile phone in the multi-device collaboration home page, and displays the switching inquiry card 730.

The switching inquiry card 730 is similar to the switching inquiry card 710 shown in FIG. 15 and will not be repeated herein. If the user clicks 68 the "confirm" button 732, the mobile phone will end a multi-screen collaboration with the other slave devices or the out-of-loop device, and establishes a multi-device collaboration with the PC based on a default or last-used collaboration type. For example, in a case that the mobile phone last establishes a multi-screen collaboration with the PC, if the user clicks 68 the "confirm" button 732, the mobile phone establishes a multi-screen collaboration with the PC, and switches the blister element 643 of the mobile phone to a blister element 644 of the multi-screen collaboration. If the user clicks the "cancel" button 733, the PC continues keeping the multi-device collaboration state with another slave device or the out-of-loop device.

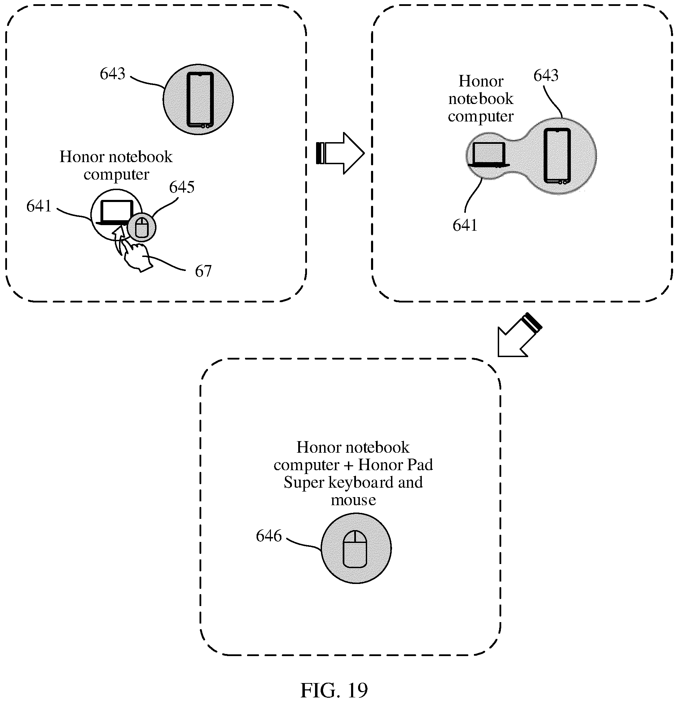

FIG. 19 is a second schematic interaction diagram of scene 3 of a multi-device collaboration method according to an embodiment of this application.

In a case of scene 3, if the collaboration type established by the target device with another slave device or an out-of-loop device supports a simultaneous connection of three devices, such as a super keyboard and mouse, and the master device further supports the collaboration type, the master device may add, in response to a drag operation of the user on the device identifier of the target device, a multi-device collaboration currently established by the target device.

As shown in FIG. 19, with an example in which the master device is a mobile phone, the target device is a PC (such as an Honor notebook computer), when the PC establishes a super keyboard and mouse with other devices (such as an Honor PAD), the mobile phone may add a state identifier 645 of a super keyboard and mouse to the blister element 641 of the PC in the multi-device collaboration home page. The state identifier 645 may be, for example, a graphical corner mark located at a bottom right corner (or other positions) of the blister element 641 of the PC. In this way, by using the state identifier, the user can learn that the PC is currently establishing a super keyboard and mouse with other devices.

If the user attempts to add the mobile phone to a super keyboard and mouse as well, the blister element 641 of the PC can be dragged 67 to the blister element 643 of the mobile phone in the multi-device collaboration home page. After dragging 67 the blister element 641 of the PC to enable the device identifier of the target device to make contact with the blister element 643 of the mobile phone, the user lifts a finger, the mobile phone displays an effect that the blister element 641 of the PC is fused with the blister element 643 of the mobile phone in the multi-device collaboration home page, so as to visually feed back to the user a state that the multi-device collaboration is currently being established. When the mobile phone successfully adds a super keyboard and mouse, the blister element 643 of the mobile phone is fully fused with the blister element 641 of the PC, so as to form a blister element 646 of the super keyboard and mouse.

In scene 4, the multi-device collaboration method may include steps as follows: display, in a state that a master device and a target device each establish a multi-device collaboration with another slave device or an out-of-loop device, a switching inquiry card by the master device in response to a drag operation of the user on the device identifier of the target device to make the device identifier of the target device in contact with the collaboration identifier of the multi-device collaboration. The switching card is used to query the user whether to switch the collaboration device.

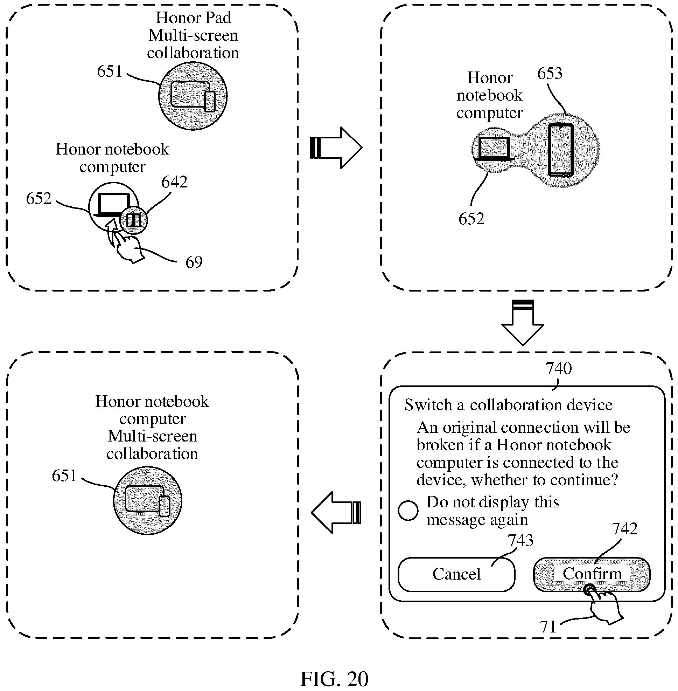

FIG. 20 is a schematic interaction diagram of scene 4 of a multi-device collaboration method according to an embodiment of this application.

As shown in FIG. 20, with an example in which the master device is a mobile phone, the target device is a PC (such as an Honor notebook computer), when the mobile phone and the PC each establish a multi-device collaboration with another slave device or an out-of-loop device, the mobile phone will display the collaboration identifier of the multi-device collaboration that is currently being established thereby in the multi-device collaboration home page. For example, if the mobile phone currently establishes a multi-screen collaboration with a tablet computer (such as an Honor Pad), the multi-device collaboration home page may display a blister element 651 of the multi-screen collaboration. In addition, the mobile phone may add a state identifier 642 to the blister element 652 of the PC in the multi-device collaboration home page. In this way, by using the state identifier 642, the user can learn that the PC is currently establishing a multi-device collaboration with devices other than the mobile phone.

If a user attempts to enable the mobile phone to establish a multi-device collaboration with the PC, a blister element 652 of the PC may be dragged 69 to a blister element 651 of a multi-screen collaboration in a multi-device collaboration home page. After dragging 69 the blister element 652 of the PC to enable the device identifier of the target device to make contact with the blister element 651 of a multi-screen collaboration, the user lifts a finger, the mobile phone displays an effect that the blister element 652 of the PC is fused with the blister element 653 of the mobile phone in the multi-device collaboration home page, and displays the switching inquiry card 740.

The switching inquiry card 740 is similar to the switching inquiry card shown in FIG. 15 and will not be repeated herein. If the user clicks 71 the "confirm" button 742, the mobile phone will end a multi-screen collaboration with the other slave devices or the out-of-loop device and a multi-screen collaboration between the PC and the other slave devices or the out-of-loop device, and establishes a multi-device collaboration with the PC based on a default or last-used collaboration type. For example, in a case that the mobile phone last establishes a multi-screen collaboration with the PC, if the user clicks 71 the "confirm" button 742, the mobile phone will establish a multi-screen collaboration with the PC. If the user clicks the "cancel" button 743, the mobile phone and the PC each continue keeping a multi-device collaboration state with another slave device or an out-of-loop device.

According to the method provided in an embodiment of this application, in a case that the master device and/or a slave device establish a multi-device collaboration, the master device may add or switch, by using different policies according to different scenes in response to an operation in a multi-device collaboration home page of the user, devices participating in the multi-device collaboration, such that user experience is improved.

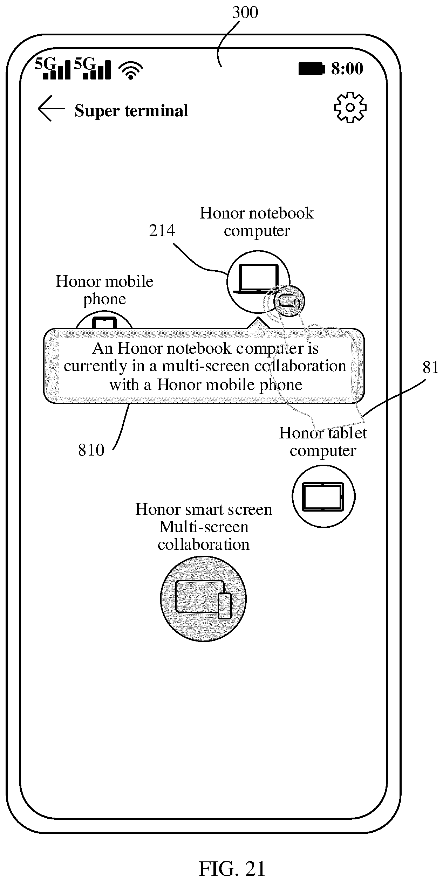

FIG. 21 is another schematic interaction diagram of a multi-device collaboration method according to an embodiment of this application.

As shown in FIG. 21, in a case that a slave device has established a multi-device collaboration with another slave device or an out-of-loop device, if the user attempts to view with which other slave device or out-of-loop device the slave device is currently in a multi-device collaboration, the user can click 81 on the device identifier 214 of the slave device in the multi-device collaboration home page 300. The master device may display collaboration state information 810 of the slave device, such as information that "XXX is currently carrying out a multi-screen collaboration with XXX", in response to the click 81 operation of the user on the device identifier 214 of the slave device. The collaboration state information 810 may disappear itself after being displayed for a period of time so as not to affect displaying of other information by the multi-device collaboration home page 300.

According to the method provided in an embodiment of this application, in a case that the slave device establishes a multi-device collaboration with another slave device or an out-of-loop device, a user can view multi-device collaboration information of a slave device in the multi-device collaboration home page, such that user experience is improved.

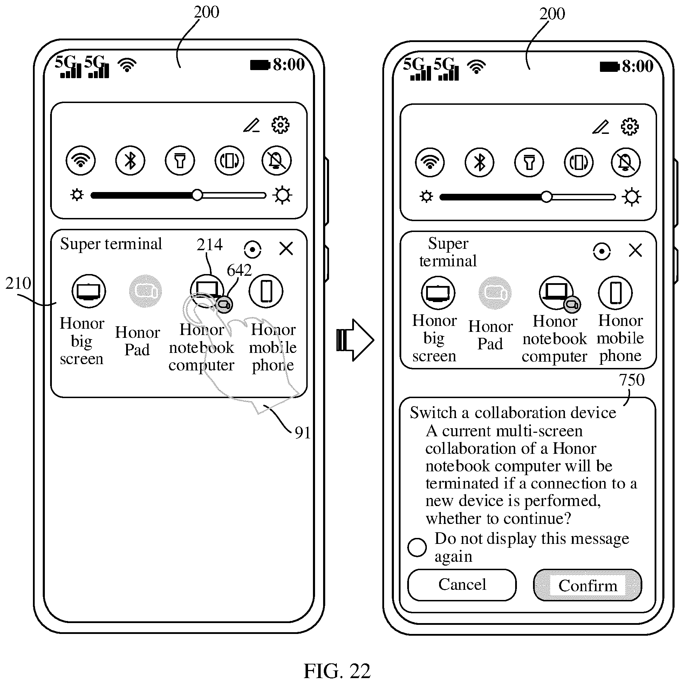

FIG. 22 is yet another schematic interaction diagram of a multi-device collaboration method according to an embodiment of this application.

As shown in FIG. 22, if a slave device has established a multi-device collaboration with another slave device or an out-of-loop device, the master device may further add a state identifier 642 to the device identifier of the slave device in the multi-device collaboration card 210. The state identifier may be, for example, a graphical identifier located at a lower right corner (or at other positions) of the device identifier 214 of the slave device. In this way, by using the state identifier 642, the user can learn that the slave device is currently establishing a multi-device collaboration with devices other than the master device. Then, if the user attempts to enable the master device to establish a multi-device collaboration with the slave device, the user can click 91 on the device identifier 214 of the slave device in the multi-device collaboration card 210. In response to a click 91 operation of the user device, the master device displays a switching inquiry card 750 in the control center page 200. The switching inquiry card 750 is similar to the switching inquiry card shown in FIG. 15, and will not be repeated herein. If the user clicks the "confirm" button, the master device will end a multi-screen collaboration between the slave device and other slave devices or the out-of-loop device, and establishes a multi-device collaboration with the slave device based on a default or last-used collaboration type. If the user clicks the cancel button, the slave device continues keeping the multi-device collaboration state with another slave device or the out-of-loop device.

According to the method provided in an embodiment of this application, in a case that a slave device establishes a multi-device collaboration with another slave device or an out-of-loop device, a user can directly add or switch devices participating in the multi-device collaboration in a control center page, such that user experience is improved.

The above embodiments provided in this application introduce various solutions of the multi-device collaboration method provided in this application. It can be understood that to implement the above functions, the electronic device includes corresponding hardware structures and/or software modules for executing the functions. A person skilled in the art should be easily aware that in combination with the units and algorithm steps of the examples described in the embodiments disclosed herein, this application can be implemented by hardware or a combination of hardware and computer software. Whether a function is performed by hardware or computer software driving hardware depends on particular applications and design constraints of the technical solutions. A person skilled in the art can use different methods to implement the described functions for each particular application, but it should not be considered that the implementation goes beyond the scope of this application.

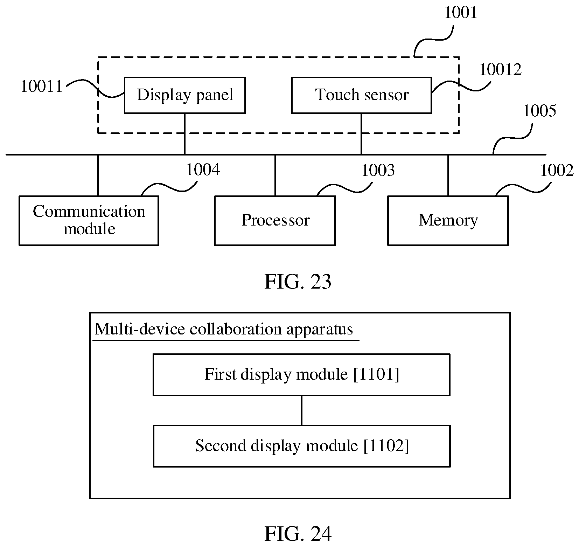

FIG. 23 is a schematic structural diagram of a multi-device collaboration apparatus according to an embodiment of this application. In an embodiment, an electronic device, such as a first electronic device, may implement corresponding functions by using a hardware apparatus shown in FIG. 23. As shown in FIG. 23, the multi-device collaboration apparatus may include: a display 1001, a memory 1002, a processor 1003 and a communication module 1004. The above devices may be connected by using one or more communication buses 1005.

In an embodiment, the display 1001 may include a display panel 10011 and a touch sensor 10012. The display 10011 is configured to display an image. The touch sensor 10012 may transfer a detected touch operation to an application processor such that a touch event type can be determined. Moreover, a visual output related to the touch operation is provided by using the display panel 10011. The processor 1003 may include one or more processing units. For example, the processor 1003 may include an application processor, a modem, a graphics processor, an image signal processor, a controller, a video codec, a digital signal processor, a baseband processor, and/or a neural network processor. Different processing units may be separate devices, or may be integrated into one or more processors. The memory 1002 is coupled to the processor 1003, and is configured to store various software programs and/or a plurality of groups of instructions. The memory 1002 may include a volatile memory and/or a nonvolatile memory.

When executed by the processor 1003, the software program and/or the plurality of groups of instructions in the memory 1002 cause the first electronic device to implement method steps as follows: A device displays a first page in response to a user operation, where the first page includes a device identifier of the first electronic device and a device identifier of at least one slave device; and establishes a multi-device collaboration with the first target device based on a first collaboration type in response to an operation of a user on a device identifier of a first target device in the first page, and displaying a type switching card in the first page. The first target device is any one of the at least one slave device, and the type switching card includes a type identifier of at least one collaboration type supported between the first electronic device and the first target device.

According to the apparatus provided in an embodiment of this application, the first page includes device identifiers of slave devices surrounding the first electronic device. In this way, the user can enable the first electronic device to establish a multi-device collaboration with any slave device by operating the device identifier of any slave device, and the user is not required to search for control portals of various collaboration types in different user interfaces, such that user experience is improved.

When executed by the processor 1003, the software program and/or the plurality of groups of instructions in the memory 1002 cause the first electronic device to further implement method steps as follows: switching, in response to a click operation of a user on a type identifier of a second collaboration type in the type switching card, a collaboration type between the first electronic device and the first target device from the first collaboration type to the second collaboration type. The second collaboration type is any one of the at least one collaboration type, and the first collaboration type is different from the second collaboration type. In this way, in a case that the first electronic device and the first target device support a plurality of collaboration modes, the first electronic device can establish a multi-device collaboration with the first target device based on a preset collaboration type first. Then the user can select a desired collaboration type on the first electronic device. The first electronic device can switch the preset collaboration type to the desired collaboration type of the user based on the selection of the user. Thus, user experience is improved.

When executed by the processor 1003, the software program and/or the plurality of groups of instructions in the memory 1002 cause the first electronic device to implement method steps as follows: displaying a second page in response to a user operation, where the second page includes a multi-device collaboration card, and in a case that the first electronic device finds the at least one slave device, the multi-device collaboration card includes the device identifier of the at least one slave device; initiating a multi-device collaboration to a second target device based on a third collaboration type in response to an operation of the user in the multi-device collaboration card, where the second target device is any one of the at least one slave device; and switching a device identifier of the second target device in the multi-device collaboration card to a collaboration identifier of the third collaboration type after a multi-device collaboration is established with the second target device.

According to the apparatus provided in an embodiment of this application, a multi-device collaboration card is added to a second page of a first electronic device, and the multi-device collaboration card includes device identifiers of slave devices surrounding the first electronic device. In this way, a user can enable the first electronic device to establish a multi-device collaboration with any slave device by clicking on the device identifier of any slave device, and is not required to search for control portals of various collaboration types in different user interfaces, such that user experience is improved.

In an implementation, when executed by the processor 1003, the software program and/or the plurality of groups of instructions in the memory 1002 cause the first electronic device to further implement method steps as follows: ending the multi-device collaboration between the first electronic device and the second target device in response to a click operation of the user on the collaboration identifier of the third collaboration type in the multi-device collaboration card. In this way, a user can directly end the established multi-device collaboration in the multi-device collaboration card, and is not required to find control portals of various collaboration types in different user interfaces, such that user experience is improved.

In an implementation, when executed by the processor 1003, the software program and/or the plurality of groups of instructions in the memory 1002 cause the first electronic device to further implement method steps as follows: The multi-device collaboration card includes a first motion identifier in a case that the first electronic device finds no slave device and is currently searching for a slave device. The first motion identifier is used to indicate a state that the first electronic device is currently searching for a slave device. In this way, the first electronic device can feed back to a user a state of currently searching for a slave device, such that user experience is improved.

In an implementation, when executed by the processor 1003, the software program and/or the plurality of groups of instructions in the memory 1002 cause the first electronic device to further implement method steps as follows: The multi-device collaboration card includes a first button in a case that the first electronic device finds no slave device and currently is not searching for the slave device; and searching for a slave device in response to a click operation of a user on the first button. In this way, the user can manually search for a slave device in a case that the first electronic device currently finds no slave device, such that user experience is improved.

In an implementation, when executed by the processor 1003, the software program and/or the plurality of groups of instructions in the memory 1002 cause the first electronic device to further implement method steps as follows: The first electronic device determines whether the at least one slave device is found, before the second page is displayed and in a case that the first electronic device determines that a current scene is a first scene, where in a case that the at least one slave device is found, the second page includes the multi-device collaboration card, and the multi-device collaboration card includes the device identifier of the at least one slave device; or in a case that no slave device is found, the second page does not include the multi-device collaboration card. The first scene includes at least one of the following scenes: a scene that the first electronic device displays the second page for the first time after an operating system is initialized; a scene that the first electronic device displays the second page for the first time after a logged-in account changes; and a scene that the first electronic device displays the second page for the first time after factory settings are restored or data is cleared. In this way, in a case that the first electronic device finds no slave device when displaying the second page for the first time, the multi-device collaboration card may not be displayed, such that disturbance to the user is reduced, and user experience is improved.

In an implementation, when executed by the processor 1003, the software program and/or the plurality of groups of instructions in the memory 1002 cause the first electronic device to further specifically implement method steps as follows: displaying the first page in response to the operation of the user in the multi-device collaboration card. In this way, the first electronic device can directly skip from the second page to the first page in response to the user operation such that the user can perform an operation of switching a collaboration type, etc. in the first page, and user experience is improved.

In an implementation, when executed by the processor 1003, the software program and/or the plurality of groups of instructions in the memory 1002 cause the first electronic device to further specifically implement method steps as follows: displaying the first page in response to a long-press operation of the user on a device identifier of any one of electronic devices in the multi-device collaboration card.

In an implementation, when executed by the processor 1003, the software program and/or the plurality of groups of instructions in the memory 1002 cause the first electronic device to further specifically implement method steps as follows: displaying the first page in response to a long-press operation of the user on the collaboration identifier of the third collaboration type in the multi-device collaboration card.

In an implementation, when executed by the processor 1003, the software program and/or the plurality of groups of instructions in the memory 1002 cause the first electronic device to further specifically implement method steps as follows: displaying the first page in response to a click operation of the user on the second button in the multi-device collaboration card.

In this way, the user can open the first page through a plurality of methods and manage a multi-device collaboration in the first page, such that user experience is improved.

In an implementation, when executed by the processor 1003, the software program and/or the plurality of groups of instructions in the memory 1002 cause the first electronic device to further specifically implement method steps as follows: establishing the multi-device collaboration with the first target device based on the first collaboration type in response to a drag operation of the user on the device identifier of the first target device on the first page to make the device identifier of the first target device in contact with the device identifier of the first electronic device, and displaying the type switching card in the first page.

In an implementation, the type switching card further includes a third button. When executed by the processor 1003, the software program and/or the plurality of groups of instructions in the memory 1002 cause the first electronic device to further specifically implement method steps as follows: breaking the multi-device collaboration with the first target device in response to a click operation of the user on the third button. In this way, the user can end the multi-device collaboration between the first electronic device and the first target device in the second page, such that user experience is improved.

In an implementation, the first page further includes a fourth button. When executed by the processor 1003, the software program and/or the plurality of groups of instructions in the memory 1002 cause the first electronic device to further specifically implement method steps as follows: displaying a third page in response to a click operation of the user on the fourth button, where the third page includes a first list, and the first list includes an option of at least one collaboration type; displaying a fourth page in response to a click operation of the user on a first option, where the first option is an option of any collaboration type in the first list, and the fourth page includes an on/off button of a collaboration type corresponding to the first option; and enabling or disabling the collaboration type corresponding to the first option in response to a click operation of the user on the on/off button. In this way, the user can control various collaboration types to be enabled or disabled, etc., such that user experience is improved.

In an implementation, when executed by the processor 1003, the software program and/or the plurality of groups of instructions in the memory 1002 cause the first electronic device to further implement method steps as follows: generating a first switching card in response to the operation of the user on the device identifier of the first target device in the first page, in a state that a multi-device collaboration has been established with a first slave device based on a fourth collaboration type, where the fourth collaboration type does not support a simultaneous connection of three electronic devices, and the first switching card is used to query the user whether to switch a collaboration device; and ending the multi-device collaboration with the first slave device in response to the operation of the user on the first switching card, and establishing the multi-device collaboration between the first electronic device and the first target device.

In an implementation, when executed by the processor 1003, the software program and/or the plurality of groups of instructions in the memory 1002 cause the first electronic device to further implement method steps as follows: adding the first target device to the established multi-device collaboration in response to the operation of the user on the device identifier of the first target device in the first page, in a state that a multi-device collaboration has been established with a first slave device based on a fifth collaboration type. The fifth collaboration type supports a simultaneous connection of three electronic devices.

In an implementation, when executed by the processor 1003, the software program and/or the plurality of groups of instructions in the memory 1002 cause the first electronic device to further implement method steps as follows: generating a second switching card in response to the operation of the user on the device identifier of the first target device in the first page, in a state that a multi-device collaboration has been established with an out-of-loop device , where the second switching card is used to query the user whether to switch a collaboration device; and ending the multi-device collaboration with the out-of-loop device in response to an operation of the user on the second switching card, and establishing the multi-device collaboration between the first electronic device and the first target device.

In an implementation, when executed by the processor 1003, the software program and/or the plurality of groups of instructions in the memory 1002 cause the first electronic device to further implement method steps as follows: generating a third switching card in response to the operation of the user on the device identifier of the first target device in the first page, in a state that the first target device has established a multi-device collaboration with another slave device or an out-of-loop device based on a fourth collaboration type, where the fourth collaboration type does not support a simultaneous connection of three electronic devices, and the third switching card is used to query the user whether to switch a collaboration device; and ending, in response to an operation of the user on the third switching card, the multi-device collaboration established by the first target device, and establishing the multi-device collaboration between the first electronic device and the first target device.

In an implementation, when executed by the processor 1003, the software program and/or the plurality of groups of instructions in the memory 1002 cause the first electronic device to further implement method steps as follows: joining, in response to the operation of the user on the device identifier of the first target device in the first page, the multi-device collaboration established by the first target device, in a state that the first target device has established a multi-device collaboration with another slave device or an out-of-loop device based on a fifth collaboration type, where the fifth collaboration type supports a simultaneous connection of three electronic devices.

In an implementation, when executed by the processor 1003, the software program and/or the plurality of groups of instructions in the memory 1002 cause the first electronic device to further implement method steps as follows: generating a fourth switching card in response to the operation of the user on the device identifier of the first target device in the first page, in a state that the first electronic device and the first target device each have established a multi-device collaboration with another slave device or an out-of-loop device, where the fourth switching card is used to query the user whether to switch a collaboration device; and ending, in response to an operation of the user on the fourth switching card, the multi-device collaboration established by each of the first electronic device and the first target device, and establishing the multi-device collaboration between the first electronic device and the first target device.

In an implementation, when executed by the processor 1003, the software program and/or the plurality of groups of instructions in the memory 1002 cause the first electronic device to further implement method steps as follows: generating a fifth switching card in response to the click operation of the user on the device identifier of the second target device in the multi-device collaboration card, in a state that the second target device has established a multi-device collaboration with another slave device or an out-of-loop device, where the fifth switching card is used to query the user whether to switch a collaboration device; and ending, in response to an operation of the user on the fifth switching card, the multi-device collaboration established by the second target device, and establishing the multi-device collaboration between the first electronic device and the second target device.

In this way, in a case that the first electronic device and/or a slave device establish a multi-device collaboration, the first electronic device may add or switch, by using different policies according to different scenes in response to an operation in a multi-device collaboration home page of the user, devices participating in the multi-device collaboration, such that user experience is improved.

FIG. 24 is a schematic structural diagram of another multi-device collaboration apparatus according to an embodiment of this application. In an embodiment, an electronic device, such as a first electronic device, may implement corresponding functions by using a software apparatus shown in FIG. 24. As shown in FIG. 24, the multi-device collaboration apparatus may include:

a first display module 1101, configured to display a first page in response to a user operation, where the first page includes a device identifier of the first electronic device and a device identifier of at least one slave device; and a second display module 1102, configured to establish a multi-device collaboration with the first target device based on a first collaboration type in response to an operation of a user on a device identifier of a first target device in the first page, and display a type switching card in the first page. The first target device is any one of the at least one slave device, and the type switching card includes a type identifier of at least one collaboration type supported between the first electronic device and the first target device.

An embodiment of this application further provides a computer-readable storage medium. The computer-readable storage medium stores instructions. The instructions cause a computer to perform the methods in the above various aspects when running on the computer.

An embodiment of this application further provides a computer program product including instructions. The instructions cause a computer to perform the methods in the above various aspects when running on the computer.

An embodiment of this application further provides a chip system. The chip system includes a processor, configured to support the above apparatus to implement functions involved in the above aspects, for example, generate or process information involved in the above methods. In a possible design, the chip system further includes a memory. The memory is configured to store computer instructions and data necessary to the multi-device collaboration apparatus. The chip system may include a chip, or may include a chip and another discrete device.

The objectives, technical solutions and beneficial effects of this application are further described in detail in the above specific implementations. It should be understood that the above implementations are merely specific implementations of this application, but are not intended to limit the scope of protection of this application. Any modification, equivalent replacement or improvement made based on the technical solutions of embodiments of this application shall all fall within the scope of protection of this application.

## Claims

1. A multi-device collaboration method, comprising:
displaying, by a first electronic device, a first page in response to a user operation, wherein the first page comprises a device identifier of the first electronic device and a device identifier of at least one slave device; and
establishing, by the first electronic device, a multi-device collaboration with a first target device based on a first collaboration type in response to an operation of a user on a device identifier of the first target device in the first page, and displaying a type switching card in the first page, wherein
the first target device is any one of the at least one slave device, and the type switching card comprises a type identifier of at least one collaboration type supported between the first electronic device and the first target device.

2. The method according to claim 1, wherein the method further comprises:
switching, by the first electronic device, in response to a click operation of the user on a type identifier of a second collaboration type in the type switching card, the collaboration type between the first electronic device and the first target device from the first collaboration type to the second collaboration type, wherein
the second collaboration type is any one of the at least one collaboration type, and the first collaboration type is different from the second collaboration type.

3. The method according to claim 1 or 2, wherein the method further comprises:
displaying, by the first electronic device, a second page in response to the user operation, wherein the second page comprises a multi-device collaboration card, and in a case that the first electronic device finds the at least one slave device, the multi-device collaboration card comprises the device identifier of the at least one slave device;
initiating, by the first electronic device, a multi-device collaboration to a second target device based on a third collaboration type in response to an operation of the user in the multi-device collaboration card, wherein the second target device is any one of the at least one slave device; and
switching, by the first electronic device, a device identifier of the second target device in the multi-device collaboration card to a collaboration identifier of the third collaboration type after establishing the multi-device collaboration with the second target device.

4. The method according to claim 3, wherein the method further comprises:
ending, by the first electronic device, the multi-device collaboration between the first electronic device and the second target device in response to a click operation of the user on the collaboration identifier of the third collaboration type in the multi-device collaboration card.

5. The method according to claim 3, wherein the method further comprises:
the multi-device collaboration card comprises a first motion identifier in a case that the first electronic device finds no slave device and is currently searching for a slave device, wherein the first motion identifier is used to indicate a state that the first electronic device is currently searching for a slave device.

6. The method according to claim 3, wherein the method further comprises:
the multi-device collaboration card comprises a first button in a case that the first electronic device finds no slave device and currently is not searching for a slave device; and
searching, by the first electronic device, for a slave device in response to a click operation of the user on the first button.

7. The method according to claim 3, wherein the method further comprises:
determining, by the first electronic device, whether the at least one slave device is found, before the second page is displayed and in a case that the first electronic device determines that a current scene is a first scene, wherein
in a case that the at least one slave device is found, the second page comprises the multi-device collaboration card, and the multi-device collaboration card comprises the device identifier of the at least one slave device; or in a case that no slave device is found, the second page does not comprise the multi-device collaboration card, wherein
the first scene comprises at least one of the following scenes:
a scene that the first electronic device displays the second page for the first time after an operating system is initialized;
a scene that the first electronic device displays the second page for the first time after a logged-in account changes; and
a scene that the first electronic device displays the second page for the first time after factory settings are restored or data is cleared.

8. The method according to any one of claims 3 to 7, wherein the displaying, by a first electronic device, a first page in response to a user operation comprises: displaying, by the first electronic device, the first page in response to the operation of the user in the multi-device collaboration card.

9. The method according to claim 8, wherein the displaying, by the first electronic device, the first page in response to the operation of the user in the multi-device collaboration card comprises: displaying, by the first electronic device, the first page in response to a long-press operation of the user on a device identifier of any one of electronic devices in the multi-device collaboration card.

10. The method according to claim 8, wherein the displaying, by the first electronic device, the first page in response to the operation of the user in the multi-device collaboration card comprises: displaying, by the first electronic device, the first page in response to a long-press operation of the user on the collaboration identifier of the third collaboration type in the multi-device collaboration card.

11. The method according to claim 8, wherein the multi-device collaboration card comprises a second button, and the displaying, by the first electronic device, the first page in response to the operation of the user in the multi-device collaboration card comprises: displaying, by the first electronic device, the first page in response to a click operation of the user on the second button in the multi-device collaboration card.

12. The method according to any one of claims 1 to 11, wherein the establishing, by the first electronic device, a multi-device collaboration with a first target device based on a first collaboration type in response to an operation of a user on a device identifier of the first target device in the first page, and displaying a type switching card in the first page comprise:
establishing, by the first electronic device, the multi-device collaboration with the first target device based on the first collaboration type in response to a drag operation of the user on the device identifier of the first target device in the first page to make the device identifier of the first target device in contact with the device identifier of the first electronic device, and displaying the type switching card in the first page.

13. The method according to any one of claims 1 to 12, wherein the type switching card further comprises a third button, and the method further comprises: breaking, by the first electronic device, the multi-device collaboration with the first target device in response to a click operation of the user on the third button.

14. The method according to any one of claims 1 to 13, wherein the first page further comprises a fourth button, and the method further comprises:
displaying, by the first electronic device, a third page in response to a click operation of the user on the fourth button, wherein the third page comprises a first list, and the first list comprises an option of at least one collaboration type;
displaying, by the first electronic device, a fourth page in response to a click operation of the user on a first option, wherein the first option is an option of any collaboration type in the first list, and the fourth page comprises an on/off button of a collaboration type corresponding to the first option; and
enabling or disabling, by the first electronic device, the collaboration type corresponding to the first option in response to a click operation of the user on the on/off button.

15. The method according to any one of claims 1 to 14, wherein the method further comprises:
generating, by the first electronic device, a first switching card in response to the operation of the user on the device identifier of the first target device in the first page, in a state that the first electronic device has established a multi-device collaboration with a first slave device based on a fourth collaboration type, wherein the fourth collaboration type does not support a simultaneous connection of three electronic devices, and the first switching card is used to query the user whether to switch a collaboration device; and
ending, by the first electronic device, the multi-device collaboration with the first slave device in response to the operation of the user on the first switching card, and establishing the multi-device collaboration between the first electronic device and the first target device.

16. The method according to any one of claims 1 to 14, wherein the method further comprises:
adding, by the first electronic device, the first target device to the established multi-device collaboration in response to the operation of the user on the device identifier of the first target device in the first page, in a state that the first electronic device has established a multi-device collaboration with a first slave device based on a fifth collaboration type, wherein the fifth collaboration type supports a simultaneous connection of three electronic devices.

17. The method according to any one of claims 1 to 14, wherein the method further comprises:
generating, by the first electronic device, a second switching card in response to the operation of the user on the device identifier of the first target device in the first page, in a state that the first electronic device has established a multi-device collaboration with an out-of-loop device, wherein the second switching card is used to query the user whether to switch a collaboration device; and
ending, by the first electronic device, the multi-device collaboration with the out-of-loop device in response to an operation of the user on the second switching card, and establishing the multi-device collaboration between the first electronic device and the first target device.

18. The method according to any one of claims 1 to 14, wherein the method further comprises:
generating, by the first electronic device, a third switching card in response to the operation of the user on the device identifier of the first target device in the first page, in a state that the first target device has established a multi-device collaboration with another slave device or an out-of-loop device based on a fourth collaboration type, wherein the fourth collaboration type does not support a simultaneous connection of three electronic devices, and the third switching card is used to query the user whether to switch a collaboration device; and
ending, by the first electronic device in response to an operation of the user on the third switching card, the multi-device collaboration established by the first target device, and establishing the multi-device collaboration between the first electronic device and the first target device.

19. The method according to any one of claims 1 to 14, wherein the method further comprises:
joining, by the first electronic device in response to the operation of the user on the device identifier of the first target device in the first page, the multi-device collaboration established by the first target device, in a state that the first target device has established a multi-device collaboration with another slave device or an out-of-loop device based on a fifth collaboration type, wherein the fifth collaboration type supports a simultaneous connection of three electronic devices.

20. The method according to any one of claims 1 to 14, wherein the method further comprises:
generating, by the first electronic device, a fourth switching card in response to the operation of the user on the device identifier of the first target device in the first page, in a state that the first electronic device and the first target device each have established a multi-device collaboration with another slave device or an out-of-loop device, wherein the fourth switching card is used to query the user whether to switch a collaboration device; and
ending, by the first electronic device in response to an operation of the user on the fourth switching card, the multi-device collaboration established by each of the first electronic device and the first target device, and establishing the multi-device collaboration between the first electronic device and the first target device.

21. The method according to any one of claims 2 to 14, wherein the method further comprises:
generating, by the first electronic device, a fifth switching card in response to the click operation of the user on the device identifier of the second target device in the multi-device collaboration card, in a state that the second target device has established a multi-device collaboration with another slave device or an out-of-loop device, wherein the fifth switching card is used to query the user whether to switch a collaboration device; and
ending, by the first electronic device in response to an operation of the user on the fifth switching card, the multi-device collaboration established by the second target device, and establishing the multi-device collaboration between the first electronic device and the second target device.

22. An electronic device, comprising: a processor, a memory and a display, wherein the memory stores program instructions, and the program instructions cause the electronic device to perform the method according to any one of claims 1 to 21 when performed by the processor.

23. A computer-readable storage medium, wherein the computer-readable storage medium comprises instructions, and the instructions cause a computer to perform the method according to any one of claims 1 to 21 when running on the computer.
